# EUROPEAN PATENT SPECIFICATION

(11) **EP 1 652 894 B1**
(45) Date of publication and mention of the grant of the patent: **31.12.2008**
(21) Application number: 05023526.6
(22) Date of filing: 27.10.2005
(51) Int. Cl.: C09B 67/50, G03G 5/06

(54) **Titanyl phthalocyanine, electrophotographic image bearing member, and electrophotographic apparatus**
Titanyl-Phthalocyanin, elektrophotographischer Bildträger und elektrophotographisches Gerät
Ti-phthalocyanine, support d'image électrophotographique et appareil électrophotographique

(30) Priority: 28.10.2004 JP 2004313745; 16.08.2005 JP 2005235901
(43) Date of publication of application: 03.05.2006
(73) Proprietor: Ricoh Company, Ltd., Tokyo 143-8555 (JP)
(72) Inventor: Yamazaki, Junichi, Tokyo 143-8555 (JP)
(74) Representative: Barz, Peter

(56) References cited:
- JP-A- 2000 112 155
- JP-A- 2004 126 560
- JP-A- 2004 163 862
- US-A- 5 252 417
- US-A- 5 440 029
- FUJIMAKI Y ET AL: "NEAR-INFRARED SENSITIVE ELECTROPHOTOGRAPHIC PHOTOCONDUCTORS USING OXOTITANIUM PHTHALOCYANINE" JOURNAL OF IMAGING TECHNOLOGY, SOC. FOR IMAGING SCIENCE AND TECHNOLOGY, SPRINGFIELD, VA, US, vol. 17, no. 5, 1 October 1991 (1991-10-01), pages 202-206, XP000273397
- W.ZHANG ET AL.: "A Study on Y-TiOPc - A highly sensitivity Organic Photoconductor in the near Infrared Spectrum" PHOTOGR.SCIENCE AND PHOTOCHEM., vol. 16, no. 4, 1998, pages 338-342, XP009061625

## Description

The present invention relates to an electrophotographic technology, and more particularly to an organic dye having a particular crystal form, its manufacturing method, and its use in an electrophotographic image bearing member, an electrophotographic apparatus, and a process cartridge.

### Discussion of the Background

Electrophotographic apparatuses are typically used in photocopiers, printers, facsimile machines, etc. Recently, the performance thereof has been significantly improved. Especially, the performance of optical printers in which information is converted into digital signals and optical writing is performed on an electrophotographic image bearing member has been significantly improved in light of definition, gradation, and colorization. Currently, small-sized, economical and reliable semiconductor lasers (LD) , and light emitting diodes (LED) are popularly used. An LED having a light-emitting wavelength of 660 nm, and an LD having a light-emitting wavelength range in the near infra-red range are mainly used. An LD and an LED having a shorter wavelength are beginning to be introduced into the market. Therefore, the development of electrophotographic image bearing member highly sensitive to a range from the visible wavelength area to the near infra-red area have been demanded to deal with such a light source.

The photosensitive wavelength area of an electrophotographic image bearing member highly depends on the photosensitive wavelength area of a charge generation material for use in the image bearing member. Therefore, various kinds of charge generation materials such as various kinds of azo dyes, polycyclic xenon dyes, trigonal selenium, various kinds of phthalocyanine dyes, etc., have been developed. Among these, titanyl phthalocyanine shows high sensitivity to light having a wavelength of from 600 to 800 nm. Therefore, titanyl phthalocyanine is extremely important and useful as materials for electrophotographic printers and digital photocopiers using an LED or LD as its light source.

On the other hand, characteristic conditions for an electrophotographic image bearing member which is repetitively used in Carlson process and its similar processes are, for example, electrostatic characteristics such as sensitivity, acceptable potential, retention of potential, stability of potential, residual potential, and spectroscopic characteristics. It is empirically known that the life length of an image bearing member, especially a highly sensitive image bearing member, is shortened by decrease in chargeability and increase in residual potential during repetitive use. This is true in the case in which titanyl phthalocyanine is used. Currently, an image bearing member using titanyl phthalocyanine is not still stable for repetitive use and therefore improvement on the performance thereof is yearned.

Various kinds of studies have been made to the crystal types of the titanyl phthalocyanine mentioned above. For example, published unexamined Japanese patent application No. (hereinafter referred to as JOP) S59-49544 describes a crystal of titanyl phthalocyanine having a strong diffraction peak observed at Bragg (2θ) angles of 9.2 °, 13.1 °, 20. 7 °, 26.2 °, and 27.1 °. JOP S59-166959 describes a crystal of titanyl phthalocyanine having a strong diffraction peak observed at Bragg (2θ) angles of 7.5 °, 12.6 °, 13.0 °, 25.4 °, 26.2 ° and 28.6 °. In addition, JOP S64-17066 describes a crystal of titanyl phthalocyanine having a strong diffraction peak observed at Bragg (2θ) angles of 9.5 °, 9.7 °, 11.7 °, 15.0 °, 23.5 °, 24.1 °, and 27.3 °.

As mentioned above, it is found that titanyl phthalocyanine has various kinds of crystal types, such as Y type, A type, B type, and C type. The A type and B type are also referred to as β type and α type, respectively.

In the case of the Y type titanyl phthalocyanine, the strongest peak is observed at a Bragg (2θ) angle of 27.3 °(± 0.2 °) in X-ray diffraction spectrum. The A type titanyl phthalocyanine has its strongest peak at a Bragg (2θ) angle of 26.3 °. In addition, it is known that the crystal form of the Y type titanyl phthalocyanine is metastable and easy to be transformed for a mechanical stress during dispersion.

For example, JOP H8-123052 describes that titanyl phthalocyanine having a distinct diffraction peak at a Bragg (2θ) angle of 27.3 ° (± 0.2 °) is metastable and when a dispersion liquid to be coated to form a charge generation layer is prepared using this crystal form, the titanyl phthalocyanine tends to change into a stable crystal form depending on the dispersion condition, meaning that good electric characteristics of the Y type crystal form are lost at this stage.

When the Y type titanyl phthalocyanine part of which is changed into the A type is used for an electrophotographic image bearing member, there is a drawback in that the sensitivity thereof deteriorates. To avoid this drawback, it is preferred to perform dispersion preparation while the crystal form is maintained to be the Y type when a liquid for application for use in manufacturing an electrophotographic image bearing member is prepared by using the Y type titanyl phthalocyanine.

Therefore, to prepare a liquid for application while the Y type titanyl phthalocyanine is not changed into the A type titanyl phthalocyanine, both processes of manufacturing the Y type titanyl phthalocyanine and dispersing titanyl phthalocyanine in a liquid for application are subject to the study.

Dispersion of titanyl phthalocyanine has been widely studied. For example, JOP S63-20365 describes a technology in which an aromatic hydrocarbon solvent is added to an aqueous suspension of α type oxytitanium phthalocyanine and the resultant is subject to heat treatment. However, there is a drawback such that the aromatic hydrocarbon should be removed. In addition, for example, JOP S64-17066 describes a technology in which α type oxytitanium phthalocyanine is triturated with a trituration helping agent and a dispersant using a sand grinder. In this case, the trituration helping agent is also necessary to be removed. Further, JOP H1-173042 describes a technology in which a wet type dispersion is performed after a dry type dispersion in the same dispersion device. In this case, such a dispersion device capable of performing a dry and wet dispersion involves problems such as dispersion property, and interfusion of a contaminating material, resulting in difficulty of realizing such a dispersion device.

Furthermore, JOP H4-337362 describes a dispersion method of a phthalocyanine dye having a process of colliding a mixture containing a phthalocyanine dye and a dispersant with each other. JOP H4-372954 describes another dispersion method of a phthalocyanine dye having a process of colliding a mixture containing a phthalocyanine dye and a dispersant with each other at a temperature not higher than 12 °C. JOP H4-372955 describes another dispersion method of a phthalocyanine dye having a process of colliding a mixture containing a phthalocyanine dye and a dispersant with each other at a speed of 43 to 75 m/sec. However, in these methods, a phthalocyanine dye is dispersed in advance and the mixture containing the phthalocyanine dye and a dispersant is pneumatically transported and passes through a fine hole to collide with each other. That is, there is a drawback such that crystal types change in the separate dispersion process in advance.

Further, for example, JOP H7-140681 describes a method in which an aqueous resin solution is added to an aqueous paste of titanyl phthalocyanine. However, when this is used to form a charge generating layer for use in an electrophotographic image bearing member, a drawback occurs such that the characteristics of the electrophotographic image bearing member significantly vary depending on the humidity of the environment because of the aqueous resin contained therein. Also, JOP H8-123052 describes a technology in which a Y type titanyl phthalocyanine is dispersed for 0.3 to 9 hours and a dispersion medium is an ether based medium. However, this dispersion time (0.3 to 9 hours) is such a wide range that the manufacturing method cannot be determined singly by this time length.

As seen in the situations described above, it is difficult to stably and easily obtain a Y type titanyl phthalocyanine in a dispersion state. The present inventor of the present invention describes a method in JOP 2000-103984 in which a wet cake containing a solvent is heated and dried at a temperature not lower than room temperature while the density of a dye solid portion contained in the wet cake is still not greater than 70 weight %, or the heat and dry process is performed with a reduced pressure of not greater than 10 mmHg to obtain an organic dye (i.e., Y type titanyl phthalocyanine). In addition, the present inventor of the present invention also describes another method of manufacturing an organic dye having the final process in which at least a dye is obtained while in contact with a solvent in, for example, JOP 2001-142232. In the method, an organic dye is prepared by heating and drying a wet cake containing a solvent at a temperature not lower than room temperature in a state in which the density of a dye solid portion contained in the wet cake is not less than 75 %. The thus obtained organic dye is contained in the photosensitive layer of an electrophotographic image bearing member. Further, the present inventor of the present invention also describes a method of obtaining a dispersion liquid formed of an organic dye (Y type titanyl phthalocyanine) in, for example, JOPs 2000-112155, 2000-126638, 2000-181104, and 2000-281931. In these methods, a bead mill is used to perform dispersion. Additionally, the present inventor of the present invention also describes a method in, for example, 2000-239556, in which crystal conversion process is contained in a dispersion process without heating and drying an organic dye (i.e., titanyl phthalocyanine) to obtain a dispersion liquid in which almost all of primary particles and crystal forms are maintained. Furthermore, the present inventor of the present invention also describes a technology in, for example, 2000-330308 and 2001-11335, in which the structure of a target titanyl phthalocyanine is characterized with a focus on raman spectrum. Furthermore, the present inventor of the present invention also describes an electrophotographic image bearing member and an electrophotographic apparatus, and their related technologies which can deal with high speed printing in, for example, JOPs 2004-82859, 2004-102229, 2004-126560, 2004-163862, 2004-271848, 2004-287070, and 2004-326070. In the technologies, titanyl phthalocyanine crystal having a prescribed particle size which has a diffraction peak at a Bragg (2θ) angle peculiar to characteristic X ray of CuKα is dispersed.

As the capability of an electrophotographic apparatus has been improved, the demand for the performance of an image bearing member becomes high. Therefore, although performance of an electrophotographic image bearing member has been improved by the technologies described above relative to that before the technologies, the performance is not still sufficient in terms of the level of such high demand. Especially, an electrophotographic apparatus has been recently reduced in size, the outer diameter of an electrophotographic image bearing member is 30 mm at maximum. Further, a longer life thereof is demanded. That is, extremely high durability in light of the number of printing sheets is demanded for an electrophotographic image bearing member. However, it is getting more and more difficult to satisfy such a high level demand.

As described above, various kinds of studies have been made on a preferred crystal form of phthalocyanine for use in an electrophotographic image bearing member. However, it is difficult to completely explain characteristics of phthalocyanine used as a charge generating material for an electrophotographic image bearing member in some cases by simply using X ray diffraction spectrum. Therefore, a method is used in which forms of a crystal of phthalocyanine are observed with a scanning electron microscope (SEM) or a transmission electron microscope (TEM). However, it is still difficult to determine the form of phthalocyanine suitable as a charge generating material even when the form thereof is observed with such an electron microscope. Therefore, the inventor of the present invention recognizes a need exists for determining the form of the crystal of phthalocyanine suitable as a charge generating material.

In addition, although the crystal form of titanyl phthalocyanine by X-ray diffraction has been widely studied, the relationships between the actual crystal form thereof and the obtained crystal forms are not discussed.

For example, JOP 2001-115054 shows a photograph of titanyl phthalocyanine taken by a scanning electron microscope (SEM) in Examples and Comparative Examples. However, any of them has a particle form or an irregular form and no relationship is described between the crystal form of titanyl phthalocyanine observed in the SEM photographs and its electrical characteristics.

In addition, with regard to the crystal form of phthalocyanine observed by a scanning electron microscope or a transmission electron microscope, irregular forms are described in, for example, published examined Japanese patent application No. (hereinafter referred to as JPP) H5-29109, Japanese patent No. 3176797, JOPs 2002-0322382, and 2004-126560. Ellipse or irregular forms are described in, for example, JOP H5-33357. Needle forms are described in, for example, JPP 4-47814, and JOP 2004-18600. Stick forms or needle forms are described in, for example, JPP H5-60844. However, these phthalocyanine crystal forms do not have satisfying electric characteristics.

Further, for example, JOPs 2004-83859, 2004-102229, 2004-163862, 2004-271848, 2004-287070, and 2004-326070 describe crystal forms of titanyl phthalocyanine observed by a scanning electron microscope or a transmission electron microscope. In these JOPs, it is not found that titanyl phthalocyanine having a particular crystal form has excellent electric characteristics.

Furthermore, there are reports describing the crystal structure of phthalocyaninie in, for example, page 289 of No. 3 of Vol. 32 of Journal of the Imaging Society of Japan, and page 607-609 of No. 6 of Vol. 37 of Journal of Imaging Science and Technology. Although the crystal structure is clear, it is impossible to clarify whether phthalocyanine is suitable as a charge generating material.

Whether the crystal of titanyl phthalocyanine is suitable as a charge generating material is typically evaluated and determined by X ray diffraction spectrum and the size of the crystal. However, determination based on X ray diffraction spectrum and the size of the crystal is not sufficient.

### SUMMARY OF THE INVENTION

The present invention is thus made in consideration of the background art described above. Taking into consideration a need existing for determining an evaluation item and its contents by something other than X ray diffraction spectrum to know whether titanyl phthalocyanine is suitable as a charge generating material, an object of the present invention is to provide an organic dye (i.e., Y type titanyl phthalocyanine) having a good dispersion property, a good stability with regard to electric characteristics, a high sensitivity and easy handling property, and its manufacturing method. Another object of the present invention is to provide a stable electrophotographic image bearing member in which its chargeability does not deteriorate and its residual potential does not rise even during repetitive use by using this Y type titanyl phthalocyanine. Further, another object is to provide a liquid for application for use in the electrophotographic image bearing member, which can stably form a charge generating layer over an extended period of time. Furthermore, another object is to provide an electrophotographic apparatus having the electrophotographic image bearing member and a process cartridge for use in the electrophotographic apparatus.

Briefly these objects and other objects of the present invention as hereinafter described will become more readily apparent and can be attained, either individually or in combination thereof, by a titanyl phthalocyanine including titanyl phthalocyanine crystals and at least 25 % of the titanyl phthalocyanine crystals has a regular tetrahedron form having a side length of from 0.1 to 1 µm or a fractured pseudo-regular tetrahedron form in which at least 15 % volume of its base regular tetrahedron remains, based on the total volume of all the titanyl phthlocyanine. In addition, the titanyl phthalocyanine has an X-ray diffraction spectrum such that a main peak is observed at a Bragg (2θ) angle of 27.3 ± 0.2 °.

As another aspect of the present invention, titanyl phthalocyanine is provided which includes titanyl phthalocyanine crystals and at least 25 % of the titanyl phthalocyanine crystals has a regular triangle form having a side of from 0.1 to 1 µm when observed with a transmission electron microscope (TEM) or a fractured form in which at least 15 % area of the regular triangle form remains when observed with the transmission electron microscope (TEM), based on the total area of all the titanyl phthalocyanine in a transmission electron microscope photograph. In addition, the titanyl phthalocyanine has an X-ray diffraction spectrum such that a main peak is observed at a Bragg (2θ) angle of 27.3 ± 0.2 °.

It is preferred that, for the titanyl phthalocyanine mentioned above, further multiple sharp diffraction peaks are observed at a Bragg (2θ) angle in a range of 9.0 to 10.0 (±0.2°) in the X-ray diffraction spectrum.

It is still further preferred that, for the titanyl phthalocyanine mentioned above, in the X-ray diffraction spectrum, a broad peak is observed at a Bragg (2θ) angle of 7.3 ± 0.2 ° and 24.1 ± 0.2 °.

As another aspect of the present invention, a liquid for application to an electrophotographic image bearing member is provided which contains the titanyl phthalocyanine mentioned above, a binder resin and a solvent.

It is preferred that the solvent in the liquid for application mentioned above is a ketone.

As another aspect of the present invention, a method of manufacturing a liquid for application to an electrophotographic image bearing member is provided which includes mixing Y type titanyl phthalocyanine, a binder resin and a solvent with a dispersion device to disperse the titanyl phthalocyanine. In addition, the dispersed titanyl phthalocyanine includes titanyl phthalocyanine crystals and at least 25 % of titanyl phthalocyanine crystals has a regular tetrahedron form having a side length of from 0.1 to 1 µm or a fractured pseudo-regular tetrahedron form in which at least 15 % volume of its base regular tetrahedron remains, based on the total volume of all the titanyl phthlocyanine. Further, the titanyl phthalocyanine has an X-ray diffraction spectrum such that a main peak is observed at a Bragg (2θ) angle of 27.3 ± 0.2° and multiple sharp diffraction peaks are observed at a Bragg (2θ) angle in a range of 9.0 to 10.0 °C (± 0.2 °).

As another aspect of the present invention, a method of manufacturing a liquid applied to an electrophotographic image bearing member is provided which includes mixing Y type titanyl phthalocyanine, a binder resin and a solvent with a dispersion device to disperse the titanyl phthalocyanine. In addition, the dispersed titanyl phthalocyanine includes titanyl phthalocyanine crystals and at least 25 % of titanyl phthalocyanine crystals has a regular triangle form having a side of from 0.1 to 1 µm when observed with a transmission electron microscope (TEM) or a fractured form in which at least 15 % area of the regular triangle form remains when observed with the transmission electron microscope (TEM), based on the total area of all the titanyl phthalocyanine in a transmission electron microscope photograph. Further, the dispersed titanyl phthalocyanine has an X-ray diffraction spectrum such that a main peak is observed at a Bragg (2θ) angle of 27.3 ± 0.2 ° and multiple sharp diffraction peaks are observed at a Bragg (2θ) angle in a range of 9.0 to 10.0 ° (± 0.2 °),

As another aspect of the present invention, an electrophotographic image bearing member is provided which includes an electroconductive substrate, and a charge generating layer located overlying the electroconductive substrate. The charge generating layer contains the titanyl phthalocyanine mentioned above.

It is preferred that, in the electrophotographic image bearing member mentioned above, the charge generating layer contains a butyral resin in which a butyralization degree is less than 70 mol %.

It is still further preferred that, in the electrophotographic image bearing member mentioned above, the charge generating layer contains a butyral resin in which a formalization degree is less than 15 mol %.

It is still further preferred that, in the electrophotographic image bearing member mentioned above, the butyral resin contains a polymer of a vinyl compound or a copolymer resin thereof.

It is still further preferred that the electrophotographic image bearing member mentioned above includes an electroconductive substrate and a charge generating layer formed on the electroconductive substrate using the liquid for application mentioned above.

As another aspect of the present invention, an electrophotographic apparatus is provided which includes the electrophotographic image bearing member mentioned above, a charger configured to charge the electrophotographic image bearing member, an irradiator configured to irradiate the elctrophotographic image bearing member to form a latent electrostataic image thereon, a developing device configured to develop the electrophotographic image bearing member and a transfer device configured to transfer the developed image to a trasnfer medium.

It is preferred that, in the electrophotographic apparatus mentioned above, the irradiator includes a writing light source having a wavelength not greater than 800 nm.

It is still further preferred that the electrophotographic apparatus mentioned above includes a plural of the writing light sources with a space therebetween not greater than 5 µm.

As another aspect of the present invention, a process cartridge is provided which includes the electrophotographic image bearing member mentioned above, and at least one device selected from the group consisting of a charging member, an irradiator, a developing device, a cleaning device and a quenching device. In addition, the process cartridge integrally supports the electrophotographic image bearing member and the at least one device and is detachably attached to the main body of an electrophotographic apparatus.

As another aspect of the present invention, an electrophotography forming method is provided which includes repeatin

These and other objects, features and advantages of the present invention will become apparent upon consideration of the following description of the preferred embodiments of the present invention taken in conjunction with the accompanying drawings.

### BRIEF DESCRIPTION OF THE DRAWINGS

Various other objects, features and attendant advantages of the present invention will be more fully appreciated as the same becomes better understood from the detailed description when considered in connection with the accompanying drawing(s) in which like reference characters designate like corresponding parts throughout and wherein:
Fig. 1 is a schematic diagram illustrating the appearance of the regular tetrahedron form as the basic form of the titanyl phthalocyanine of the present invention from different directions;
Fig. 2 is a schematic appearance diagram illustrating examples of the pseudo-regular tetrahedron forms of the titanyl phthalocyanine of the present invention;
Fig. 3 is a schematic diagram illustrating examples of the contours of the titanyl phthalocyanine of the present invention when the titanyl phthalocyanine is observed with a transmission electron microscope;
Fig. 4 is a schematic structural diagram illustrating an example of the device for use in putting concentrated sulfuric acid solution of the titanyl phthalocyanine of the present invention to iced water;
Fig. 5 is a schematic diagram illustrating the portion of the vibration fin included in the vibration fin type stirring device included in the device of Fig. 4;
Fig. 6 is a schematic structural diagram illustrating an example of the typical stirring devices taking a rotation blade system;
Fig. 7 is a schematic structural diagram illustrating an example of the dispersion device by which titanyl phthalocyanine is dispersed when the dispersion solution (i.e., the liquid for application for use in forming an electrophootgraphic image bearing member) of the present invention is prepared;
Fig. 8 is a schematic cross section illustrating an example of the structure of the electrophotographic image bearing member of the present invention;
Fig. 9 is a schematic cross section illustrating another example of the structure of the electrophotographic image bearing member of the present invention;
Fig. 10 is a schematic cross section illustrating further another example of the structure of the electrophotographic image bearing member of the present invention;
Fig. 11 is a schematic structural diagram illustrating an example of the electrophootgraphic apparatus and electrophotographic forming method of the present invention;
Fig. 12 is a schematic structural diagram illustrating an example of the process cartridge of the present invention;
Fig. 13 is a photograph taken by a transmission electron microscope (TEM) of the liquid for application for a charge generating layer of Example 1 described later;
Fig. 14 is an image which has been image-processed for contour detection for the photograph of Fig. 13;
Fig. 15 is an image classified based on forms for the image of Fig. 14;
Fig. 16 is a photograph taken by a transmission electron microscope (TEM) of the liquid for application for a charge generating layer of Example 2 described later;
Fig. 17 is an image which has been image-processed for contour detection for the photograph of Fig 16;
Fig. 18 is an image classified based on forms for the image of Fig. 17; and
Fig. 19 is a graph illustrating an example of the X-ray diffraction spectrum of the solidified sample formed by drying and solidifying the liquid for application for a charge generating layer of Example 1 described later.

### DETAILED DESCRIPTION OF THE INVENTION

As a result of an intensive study by the present inventor, it is found that the drawbacks mentioned above can be resolved by forming a charge generating layer by a preparing a liquid for application therefor. The liquid for application to a charge generating layer is prepared by using titanyl phthalocyanine having an X-ray diffraction spectrum such that a main peak is observed at a Bragg (2θ) angle of 27.3 ± 0.2 °. That titanyl phthalocyanine includes a titanyl phthalocyanine crystal having a regular tetrahedron form having a side length of from 0.1 to 1 µm and a titanyl phthalocyanine crystal having a fractured regular tetrahedron form in which at least 15 % of its base regular tetrahedron form remains based on volume. The mixture (i.e., titanyl phthalocyanine having a tetrahedron form and its fractured form in which at least 15 % volume of the tetrahedron form remains) mentioned above occupies at least 25% of the total volume of all the titanyl phthalocyanine. That is, the titanyl phthalocyanine of the present invention is titanyl phthalocyanine having an X-ray diffraction spectrum such that a main peak is observed at a Bragg (2θ) angle of 27.3 ± 0.2 ° and including crystals having a fractured pseudo-regular tetrahedron form. In the fractured pseudo-regular tetrahedron form, at least 15 % of its base regular tetrahydron form remains. The regular tetrahedron form has a side of from 0.1 to 1 µm. The titanyl phthalocyanine crystal having the regular tetrahedron form or the fractured pseudo-regular tetrahedron form occupies at least 25 % based on the total volume of the titanyl phthalocyanine. Similarly, it is also found that the drawbacks mentioned above can be resolved by forming a charge generating layer by preparing another liquid applied thereto. The liquid for application to a charge generating layer is prepared by using titanyl phthalocyanine having an X-ray diffraction spectrum such that a main peak is observed at a Bragg (2θ) angle of 27.3 ± 0.2 °. That titanyl phthalocyanine includes a titanyl phthalocyanine crystal having a regular triangle form having a side length of from 0.1 to 1 µm when observed with a transmission electron microscope and another titanyl phthalocyanine crystal having a fractured regular triangle form in which at least 15 % area of the base regular triangle form when observed with the transmission electron microscope. Further, the total area of the mixture of titanyl phthalocyanine crystals having a regular triangle form and a fractured regular triangle form occupies at least 25 % of the total area of all the titanyl phthalocyanine in a transmission electron microscope photograph.

The present invention is now described in detail below.

The present invention is titanyl phthalocyanine having an X-ray diffraction spectrum such that a main peak is observed at a Bragg (2θ) angle of 27.3 ± 0.2 ° . That titanyl phthalocyanine includes a titanyl phthalocyanine crystal having a regular tetrahedron form having a side length of from 0.1 to 1 µm and titanyl phthalocyanine crystal having a fractured regular tetrahedron form in which at least 15 % volume of the regular tetrahedron form remains. The titanyl phthalocyanine having a fractured form in which at least 15 % of the base tetrahedron form remains occupies at least 25 % of all the volume of the titanyl phthalocyanine.

That is, the titanyl phthalocyanine invented as mentioned above is "titanyl phthalocyanine having an X-ray diffraction spectrum such that a main peak is observed at a Bragg (2θ) angle of 27.3 ± 0.2 ° and having mixed forms of a regular tetrahedron form having a side of from 0.1 to 1 µm and its fractured form in which at least 15 % volume of the regular teterahedron form remains based on volume. In addition, the total volume of the titanyl phthalocyanine having a regular teterahedron form and its fractured form occupies at least 25 % based on the total volume of all the titanyl phthalocyanine."

In addition, the present invention is also titanyl phthalocyanine having an X-ray diffraction spectrum such that a main peak is observed at a Bragg (2θ) angle of 27.3 ± 0.2°, and including a titanyl phthalocyanine crystal having a regular triangle form having a side length of from 0.1 to 1 µm when observed with a transmission electron microscope and another titanyl phthalocyanine crystal having a fractured regular triangle form in which at least 15 % area of the base regular triangle form when observed with the transmission electron microscope. Further, the total area of the mixture of titanyl phthalocyanine crystals having a regular triangle form and a fractured regular triangle form occupies at least 25 % of the total area of all the titanyl phthalocyanine in a transmission electron microscope photograph.

In the invention mentioned above, titanyl phthalocyanine contains a mixture of a titanyl phthalocyanine crystal having a regular triangle form having a side length of from 0.1 to 1 µm when observed with a transmission electron microscope and another titanyl phthalocyanine crystal having a fractured regular triangle form in which at least 15 % area of the base regular triangle form having a side length of from 0.1 to 1 µm when observed with the transmission electron microscope. Further, the total area of the mixture of titanyl phthalocyanine crystals having a regular triangle form or a fractured regular triangle form occupies at least 25 % of the total area of all the titanyl phthalocyanine in a transmission electron microscope photograph. In this case, it does not matter what form the titanyl phthalocyanine takes in three-dimension.

Further, the present invention is also any of the titanyl phthalocyanine mentioned above having further multiple sharp diffraction peaks observed at a Bragg (2θ) angle in a range of 9.0 to 10.0 ° (± 0.2 °) in the X-ray diffraction spectrum.

Further, the present invention is also any of the titanyl phthalocyanine mentioned above having a broad peak is observed at a Bragg (2θ) angle of 7.3 ± 0.2 ° and 24.1 ± 0.2 ° in the X-ray diffraction spectrum.

Further, the present invention is a liquid for application to an electrophotographic image bearing member which includes any one of the titanyl phthalocyanine mentioned above, a binder resin, and a solvent. The solvent is preferably a ketone.

In addition, the present invention is a method of manufacturing a liquid for application to an electrophotographic image bearing member, which includes mixing Y type titanyl phthalocyanine, a binder resin and a solvent with a dispersion device to disperse the titanyl phthalocyanine. The dispersed titanyl phthalocyanine contains titanyl phthalocyanine crystals and at least 25 % of the titanyl phthalocyanine has a regular tetrahedron form having a side length of from 0.1 to 1 µm or a fractured pseudo-regular tetrahedron form in which at least 15 % volume of a base regular tetrahedron remains, based on the total volume of all the titanyl phthlocyanine. Further, the titanyl phthalocyanine has an X-ray diffraction spectrum such that a main peak is observed at a Bragg (2θ) angle of 27.3 ± 0.2 ° and multiple sharp diffraction peaks are observed at a Bragg (2θ) angle in a range of 9.0 to 10.0 °C (± 0.2 °) The titanyl phthalocyanine in the present invention is "titanyl phthalocyanine contains titanyl phthalocyanine crystals and at least 25 % of the titanyl phthalocyanine crystals has a regular tetrahedron form having a side length of from 0.1 to 1 µm and a fractured pseudo-regular tetrahedron in which at least 15 % volume of a base regular tetrahedron remains. Further, the titanyl phthalocyanine has an X-ray diffraction spectrum such that a main peak is observed at a Bragg (2θ) angle of 27.3 ± 0.2 ° and multiple sharp diffraction peaks are observed at a Bragg (2θ) angle in a range of 9.0 to 10.0 °C (± 0.2 °)".

In the present invention mentioned above, as a method of controlling the total volume of the titanyl phthalocyanine having a regular tetrahedron form or its fractured tetrahedron form to a value of at least 25 % based on the total volume of all the titanyl phthalocyanine, there can be mentioned controlling of the apparent density of titanyl phthalocyanine before dispersion and dispersion conditions during dispersion. The apparent density of titanyl phthalocyanine before dispersion is especially significant. When the primary crystal of titanyl phthalocyanine is large, excessive dispersion energy is added to fracture the crystal. As a result, when the titanyl phthalocyanine crystal after dispersion is observed with a transmission electron microscope, the total volume of titanyl phthalocyanine having a regular tetrahedron form or its fractured form tends to occupy not greater than 25 % based on the total volume of all the titanyl phtahlocyanine.

Further, the present invention is a method of manufacturing a liquid applied to an electrophotographic image bearing member by which Y type titanyl phthalocyanine, a binder resin and a solvent are mixed with a dispersion device to disperse the Y type titanyl phthalocyanine. The dispersed Y type titanyl phthalocyanine has an X-ray diffraction spectrum such that a main peak is observed at a Bragg (2θ) angle of 27.3 ± 0.2 ° and multiple sharp diffraction peaks are observed at a Bragg (2θ) angle in a range of 9.0 to 10.0 ° (± 0.2 °), and includes titanyl phthalocyanine crystal having a regular triangle having a side of from 0.1 to 1 µm when observed with a transmission electron microscope (TEM), and another titanyl phthalocyanine crystal having a fractured form in which at least 15 % area of the regular triangle remains when observed with the transmission electron microscope (TEM), and the total area of a mixture of the titanyl phthalocyanine crystal having a regular triangle or the titanyl phthalocyanine crystal having a fractured form occupies at least 25 % of the total area of all the titanyl phthalocyanine in a transmission electron microscope photograph.

In the present invention mentioned above, as a method of controlling the total volume of the titanyl phthalocyanine having a regular triangle form or its fractured triangle form to a value of at least 25 % based on the total volume of all the titanyl phthalocyanine, controlling of the apparent density of titanyl phthalocyanine before dispersion and dispersion conditions during dispersion can be mentioned. The apparent density of titanyl phthalocyanine before dispersion is especially significant. When the primary crystal of titanyl phthalocyanine is large, excessive dispersion energy is added to fracture the crystal. As a result, when the titanyl phthalocyanine crystal after dispersion is observed with a transmission electron microscope, the total volume of titanyl phthalocyanine having a regular triangle form and its fractured form tends to occupy too small a ratio based on the total volume of all the titanyl phtahlocyanine, meaning that the ratio of titanyl phthalocyanine having an irregular form is large.

Further, the present invention is an electrophotographic image bearing member which includes an electroconductive substrate, and a charge generating layer located overlying the electroconductive substrate. The charge generating layer contains any one of the titanyl phthalocyanine mentioned above.

In the electrophotographic image bearing member, it is preferred that the charge generating layer contains a butyral resin in which a butyralization degree is less than 70 mol %.

In addition, in the electrophotographic image bearing member, it is preferred that the charge generating layer contains a butyral resin in which a formalization degree is less than 15 mol %.

Further, it is preferred that either of the butyral resins is a polymer of a vinyl compound or a copolymer resin thereof.

In addition, the present invention is an electrophotograpic image bearing member including an electroconductive substrate, and a charge generating layer formed on the electroconductive substrate using the liquid for application mentioned above.

Further, the present invention is an electrophotographic apparatus including any one of the electrophotographic image bearing member mentioned above, a charger to charge the electrophotographic image bearing member, an irradiator to irradiate the elctrophotographic image bearing member to form a latent electrostataic image thereon, a developing device to develop the electrophotographic image bearing member and a transfer device configured to transfer the developed image to a trasnfer medium.

In the electrophotographic apparatus, it is preferred that the irradiator includes a writing light source having a wavelength not greater than 800 nm

In addition, it is preferred that the electrophotographic apparatus includes two or more of the writing light sources with a space therebetween not greater than 5 µm.

Further, the present invention is a process cartridge including any one of the electrophotographic image bearing member mentioned above, and at least one device selected from the group consisting of a charging member, an irradiator, a developing device, a cleaning device and a quenching device. The process cartridge integrally supports the electrophotographic image bearing member and the at least one device and is detachably attached to a main body of an electrophotographic apparatus.

In addition, the present invention is an electrophotographic forming method including repeating a cycle of charging, irradiation, development, and transfer using any one of the electrophotographic apparatus mentioned above.

As mentioned above, Y type titanyl phthalocyanine of the present invention which has X-ray diffraction spectrum such that a main peak is observed at a Bragg (2θ) angle of 27.3 ± 0.2 °C includes crystals having a fractured pseudo-regular tetrahedron form in which at least 15 % of the base regular tetrahedron remains. In addition, the base regular tetrahydron form of the fractured pseudo-regular tetrahedron form has a side length of from 0.1 to 1 µm. As mentioned above, the titanyl phthalocyanine of the present invention is "titanyl phthalocyanine having an X-ray diffraction spectrum such that a main peak is observed at a Bragg (2θ) angle of 27.3 ± 0.2 °. That titanyl phthalocyanine includes a titanyl phthalocyanine crystal having a regular tetrahedron form having a side length of from 0.1 to 1 µm and titanyl phthalocyanine crystal having a fractured regular tetrahedron form in which at least 15 % of the regular tetrahedron form remains based on volume. The mixture (i.e., titanyl phthalocyanine having a tetrahedron form or its fractured form in which at least 15 % volume of the tetrahedron form remains) mentioned above occupies at least 25 % of the total volume of all the titanyl phthalocyanine." The fractured regular tetrahedron form essentially contains at least one of the face, side, ridge line, and point of the base regular tetrahedron. This fractured regular tetrahedron form is referred to as a fractured pseudo-regular tetrahedron form.

Titanyl phthalocyanine having such a form is preferably used as a charge generating dye of an electrophotography iamge bearing member.

In the present invention, the form and the size of the crystal of titanyl phthalocyanine can be observed with a scanning electron microscope (SEM) or a transmission electron microscope (TEM). The titanyl phthalocyanine of the present invention has an X-ray diffraction spectrum such that a main peak is observed at a Bragg (2θ) angle of 27.3 ± 0.2°. That titanyl phthalocyanine includes a titanyl phthalocyanine crystal having a regular triangle form having a side length of from 0.1 to 1 µm when observed with a transmission electron microscope and another titanyl phthalocyanine crystal having a fractured regular triangle form in which at least 15 % area of the base regular triangle form remains when observed with the transmission electron microscope. Further, the total area of the mixture of titanyl phthalocyanine crystals having a regular triangle form or a fractured regular triangle form occupies at least 25 % of the total area of all the titanyl phthalocyanine in a transmission electron microscope photograph.

The fractured regular triangle essentially contains at least one of the sides and the points of the base regular triangle when observed with an electron microscope. This fractured regular triangle is referred to as a fractured pseudo-regular triangle.

A liquid for application containing titanyl phthalocyanine, which is used as a charge generating material, can be observed with a transmission electron microscope as follows: Dilute part of a liquid for application with a deionized water in order that the solid portion density thereof is about 1 % by weight; Scoop the surface of the liquid with a copper net the surface of which is electroconductively treated; and observe the scooped liquid as a sample material with a transmission electron microscope.

In addition, when titanyl phthalocyanine powder is used, the titanyl phthalocyanine powder is put in a beaker containing a deionized water and the surface of the liquid with a copper net the surface of which is electroconductively treated is scooped to observe the scooped liquid as a sample material with a transmission electron microscope.

Methods other than the method mentioned above can be used to prepare a sample material for observation with a transmission electron microscope. For example, methods described in documents such as "Transmission electron microscope (Surface analysis technology selection)" authored by Surface Science Society of Japan (published in March, 1999 by Maruzen Co., Ltd.), "Basic techniques for transmission electron microscopy" authored by M.A. Hayat (published by Academic Press in December, 1985, and "How to use a transmission electron microscope" authored by Toshio Nagai (published by Academic Press in September, 1981)

As mentioned above, although various kinds of methods have been studied with regard to the processes of drying, extracting or dispersing titanyl phthalocyanine after synthesis thereof, crystallization of a dye (i.e., titanyl phthalocyanine) has not been studied sufficiently. As a result of the study on crystallization of titanyl phthalocyanine with a focus on the process of crystallization by the inventor of the present invention, it is found that the process of crystallizing titanyl phthalocyanine is important and it is especially essential whether titanyl phthalocyanine is suitable as charge generating material can be determined based on not only the crystal type of the titanyl phthalocyanine observed by using X-ray diffraction but also the form of the titanyl phthalocyanine crystal.

Titanyl phthalocyanine suitable as a charge generating material for use in an electrophotographic image bearing member which satisfies a desired performance level can be manufactured as follows: Prepare Y type titanyl phthalocyanine crystal having regular tetrahedron form having a side of from 0.1 to 1.0 µm while the titanyl phthalocyanine has an X-ray diffraction spectrum such that a distinctive (i.e., main) peak is observed at a Bragg (2θ) angle of 27.3 ± 0.2 °; Disperse the Y type titanyl phthalocyanine to prepare a liquid for application; In the preparation of a liquid for application, a crystal of the Y type titanyl phthalocyanine having a regular tetrahedron form having a side of from 0.1 to 1.0 µm is fractured in the dispersion process is prepared such that at least 15 % volume of the base regular tetrahedron form remains in the fractured form to have a pseudo-regular tetrahedron form while controlling the crystal having the regular tetrahedron form or the pseudo-regular tetrahedron form in an amount of at least 25 % based on all the volume of titanyl phthalocyanine. Thereby, it is possible to manufacture an electrophotographic image bearing member in which chargeability does not decrease and residual potential does not rise for repetitive use.

The detail of the titanyl phthalocyanine manufactured in the manufacturing method mentioned above is that the titanyl phthalocyanine has an X-ray diffraction spectrum such that a main peak is observed at a Bragg (2θ) angle of 27.3 (± 0.2°) and multiple diffraction peaks are observed at a Bragg (2θ) angle in the range of from 9.0 to 10.0 (± 0.2 °). Also the titanyl phthalocyanine contains a mixture of crystal having a regular tetrahedron form having a side of from 0.1 to 1 µm and crystal having a fractured form based thereon. In addition, in the fractured titanyl phthalocyanine, the base regular teterahedron form remains at least 15 % based on volume. Further, the total volume of the titanyl phthalocyanine having a regular tetrahedron form or the titanyl phthalocyanine having its fractured form is at least 25 % of the total volume of all the titanyl phthalocyanine.

In addition, the side of the regular teterahedron titanyl phthalocyanine is preferably from 0.1 to 1 µm, and more preferably from 0.1 to 0.3 µm.

Further, the side of the fractured teterahedron titanyl phthalocyanine is preferably from 0.1 to 1 µm, and more preferably from 0.1 to 0.3 µm before the titanyl phthalocyanine is fractured.

In addition, the crystal of the fractured pseudo-regular tetrahedron more preferably has a form having at least 25 % by volume of its base regular tetrahedron form and particularly preferably at least 50 % by volume. When the remaining ratio of the base regular teterahedron form is too small, preferred electric characteristics as a charge generating material for use in an electrophotographic image bearing member are not obtained, and resultantly it is impossible to stably form images therewith. In addition, when preparing the liquid for application mentioned above, the crystal having a regular tetrahedron form or a pseudo-regular tetrahedron form having at least 15 % volume of the regular tetrahedron form includes "fractured crystal" and is dispersed in a liquid for application as aggregated bodies.

The content ratio of the titanyl phthalocyanine crystal having a regular teterahedron form and a pseudo-regular tetrahedron form is further preferably not less than 25 % by volume of the content of all the titanyl phthalocyanine as mentioned above. When the content ratio is too small, there is a tendency that preferred electric characteristics as a charge generating material are not fully exercised so that it is impossible to stably form images. The fractured crystal mentioned above includes fine crystal and other forms such as irregular forms but is not limited thereto. The content of the fractured crystal is about from 5 to 25 % by volume.

Titanyl phthalocyanine suitable as a charge generating material for use in an electrophotographic image bearing member which satisfies a desired performance level can be manufactured as follows: Prepare Y type titanyl phthalocyanine crystal having a regular triangle form having a side of from 0.1 to 1.0 µm when observed with a transmission electron microscope while the titanyl phthalocyanine has an X-ray diffraction spectrum such that a distinctive (i.e., main) peak is observed at a Bragg (2θ) angle of 27.3 ± 0.2 °; Disperse the Y type titanyl phthalocyanine to prepare a liquid for application; Prepare a crystal of the Y type titanyl phthalocyanine having a regular triangle having a side of from 0.1 to 1 µm when observed with a transmission electron microscope, and a crystal of the Y type titanyl phthalocyanine having a form fractured in the dispersion process such that at least 15 % area of the base regular triangle form remains in the fractured form while controlling the total area of the mixture of titanyl phthalocyanine crystals having a regular triangle form or a fractured form in which at least 15 % of the triangle remains occupies at least 25 % of the total area of all the titanyl phthalocyanine in a transmission electron microscope photograph. Thereby, it is possible to manufacture an electrophotographic image bearing member in which chargeability does not decrease and residual potential does not rise for repetitive use.

In addition, the side of the regular triangle titanyl phthalocyanine is preferably from 0.1 to 1 µm, and more preferably from 0.1 to 0.3 µm when observed with a transmission electron microscope.

Further, the side of the fractured triangle titanyl phthalocyanine is preferably from 0.1 to 1 µm, and more preferably from 0.1 to 0.3 µm before the titanyl phthalocyanine is fractured.

When titanyl phthalocyanine is observed with a transmission electron microscope, the pseudo-regular triangle crystal formed as the result of fracture further preferably has at least 25 % by area based on the base regular triangle, and particularly preferably at least 50 % by area.

When the remaining ratio of the base regular triangle form is too small, preferred electric characteristics as a charge generating material for use in an electrophotographic image bearing member are not obtained so that it is impossible to stably form images. In addition, when preparing the liquid for application mentioned above, the crystal having a regular triangle form or a pseudo-regular triangle form having a form at least 15 % of the regular triangle form includes "fractured crystal" and is dispersed in a liquid for application as aggregated bodies.

The content ratio of the titanyl phthalocyanine formed of a pseudo-regular triangle form is further preferably not less than 25 % by area of the content of all the titanyl phthalocyanine as mentioned above. When the content ratio is too small, there is a tendency that preferred electric characteristics as a charge generating material are not fully exercised so that it is impossible to stably form images. The fractured crystal includes fine crystal and other forms such as irregular forms but is not limited thereto. The content of the fractured crystal is about from 5 to 25 % by area.

The titanyl phthalocyanine containing crystal having a pseudo-regular tetrahedron form regulated as above has an X-ray diffraction spectrum such that multiple diffraction peaks are also observed at a Bragg (2θ) angle in the range of from 9.0 to 10.0 (± 0.2 °) . Further, the aggregated bodies mentioned above have a broad peaks of 7 . 3 ° (± 0.2 °) and 24 .1° (± 0.2 °) based on the fractured crystal. Therefore, it is possible to further securely determine the titanyl phthalocyanine by each diffraction peaks mentioned above.

The titanyl phthalocyanine, which includes a pseudo-triangle crystal as regulated above when observed with a transmission electron microscope, further has multiple sharp diffraction peaks in the range of from 9.0 to 10.0 ° (± 0.2 °).
Further, the aggregated bodies mentioned above have a broad peaks of 7.3° (± 0.2°) and 24.1° (± 0.2 °) based on the fractured crystal. Therefore, it is possible to further securely determine the titanyl phthalocyanine by each diffraction peaks mentioned above.

The titanyl phthalocyanine having a pseudo-regular tetrahedron form of the present invention is now described below with reference to drawings.

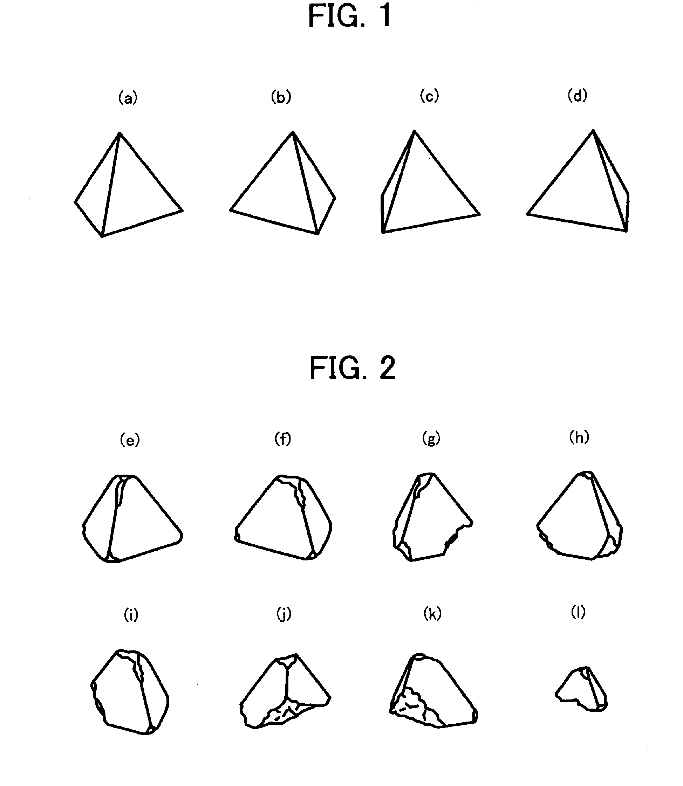

Figs. 1(a) to 1(d) are schematic appearance diagrams illustrating the basic structure (i.e., regular tetrahedron form) of titanyl phthalocyanine from different point of views. That is, each of Figs. 1(a) to 1(d) schematically illustrates an example of the appearance of the regular tetrahedron form from different directions. The crystal form of the titanyl phthalocyanine of the present invention is formed based on these regular tetrahedron form.

However, due to the mechanical stress during the synthesis process and/or the dispersion process, titanyl phthalocyanine having a regular tetrahedron form is fractured and resultantly devoid of points and sides. Therefore, it is difficult to retain the regular tetrahedron form having sharp points as illustrated in Fig. 1. In addition, such point deficiency can be caused by insufficient development of crystal in the crystal development process. That is, the crystal forms of titanyl phthalocyanine obtained after the synthesis process and/or the dispersion process are forms (i.e., pseudo-regular tetrahedron forms) in which points are missing from a regular tetrahedron forms such as the schematic appearance diagrams of Figs. 2 (e) to 2 (l) .

The amount and degree of the deficiency vary. As mentioned above, to exercise a high performance as a charge generating material for use in an electrophotographic image bearing member, it is important for such a deficiency form to still have part of a regular tetrahedron form. As the degree of deficiency becomes high, the form goes irregular. Such forms have a diffraction peak at a Bragg (2θ) angle of 27.3 (± 0.2 °) but electric characteristics thereof deteriorate. Meaning that such forms illustrated in Figs. 2(e) to 2(l) in which part of a regular tetrahedron form still remains are allowed. A pseudo-regular tetrahedron form illustrated in Fig. 2(l) is an example in which 15 % of the base regular tetrahedron form remains. Therefore, the forms illustrated in Figs. 2 (e) to 2 (k) are examples of other pseudo-regular tetrahedron forms in which 15 % of the base regular tetrahedron form remains.

The titanyl phthalocyanine of the present invention containing crystals having a pseudo-regular triangle when observed with a transmission electron microscope is now described in detail with reference to drawings.

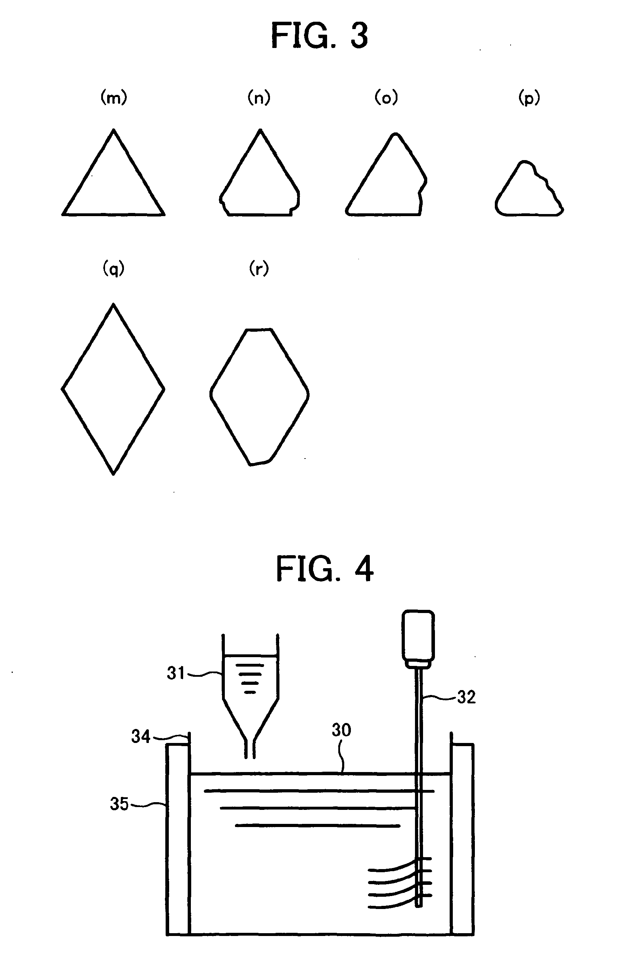

Figs. 3 (m) to 3 (r) are diagrams illustrating a contour of titanyl phthalocyanine crystal when titanyl phthalocyanine is observed with a transmission electron microscope. In Fig. 3, Fig. 3 (m) is a diagram illustrating a form having an intact triangle form. Fig. 3(n) is a diagram illustrating a form having an almost complete triangle which is slightly devoid of two point portions. Fig. 3(o) is a diagram illustrating a form in which one point portion is significantly missing and another point portion is slightly missing from its base triangle form. Fig. 3(p) is a diagram illustrating a significantly fractured from its base triangle form. When titanyl phthalocyanine is observed with a transmission electron microscope, there are cases in which sides of two crystals having a triangle form are overlapped as illustrated in Fig. 3(q) . Fig. 3 (r) is an example of the form in which points are devoid of their base triangles of Fig. 3 (q). In the present invention, the forms illustrated in Figs. 3 (q) and 3 (r) are not treated as a figure of rhombus but as two triangles.

### [Method of manufacturing titanyl phthalocyanine]

Next, a method of manufacturing titanyl phthalocyanine is described.

To obtain titanyl phthalocyanine having the form illustrated above, it is important to minutely set and control conditions in the crystallization process, which has been unfocused so far. That is, in the process of dissolving titanyl phthalocyanine in concentrated sulfuric acid and dropping the resultant in iced water to obtain Y type titanyl phthalocyanine, the temperature of the titanyl phthalocyanine concentrated sulfuric acid solution is precisely controlled. The temperature is controlled preferably from -1 to 1 °C. In addition, conditions during the dropping of the solution to iced water are also taken into consideration. The rise in temperature during crystallization is accurately controlled to rise not higher than 1 °C. Further, it is important that the iced water is widely stirred in such a manner that the solution is not locally but entirely stirred not to prevent the crystal development. In addition, when stirring is performed with a stirrer having a typical rotation blade, the solution is stirred by an eddy formed by the blade in rotation, which may not be sufficient to entirely stir the solution. In such a stirring manner, when concentrated sulfuric acid solution of titanyl phthalocyanine is dropped to iced water, the density of concentrated sulfuric acid is high at the point where the solution is dropped to the iced water. In addition, the temperature rises to not lower than 1 °C. Therefore, it is difficult to obtain crystals having a desired and excellent form. Therefore, it is preferred to use a device by which stirring is sufficiently performed and temperature rise can be prevented as a device by which the concentrated sulfuric acid solution of titanyl phthalocyanine is dropped to iced water.

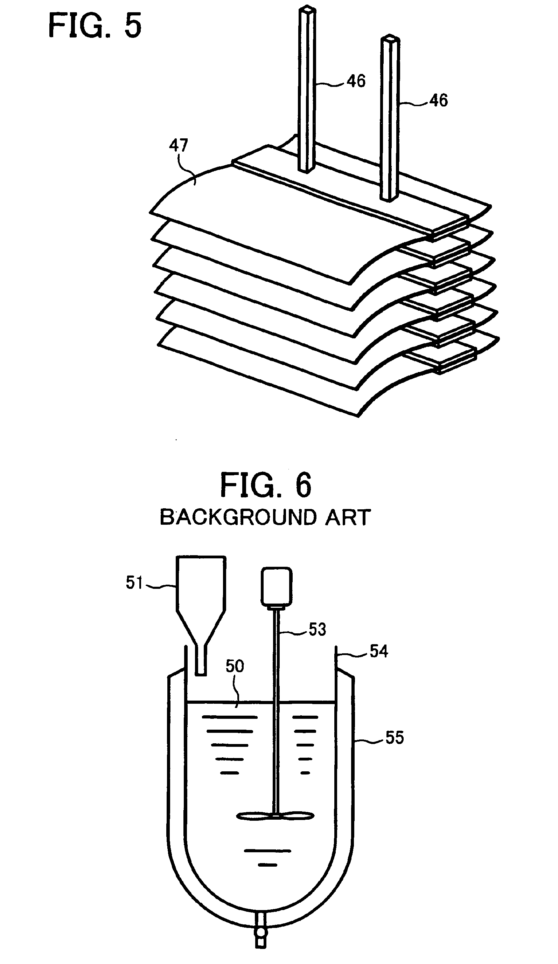

Fig. 4 is a schematic diagram illustrating an example of the device by which concentrated sulfuric acid solution of titanyl phthalocyanine is dropped to iced water. In Fig. 4, 30 represents iced water, 31 represents a device of dropping concentrated sulfuric acid solution of titanyl phthalocyanine to the iced water 30, 32 represents a vibration fin type stirring device, 34 represent a tank, and 35 represents a cooling jacket. In addition, Fig. 5 is an enlarged schematic diagram illustrating the portion of the vibration fin of the vibration fin type stirring device illustrated in Fig. 4. In Fig. 5, 46 represents sticks to which the vibration fins are attached and 47 represents the vibration fins 47. When the sticks 46 move ups and downs, the vibration fins 47 bend and stir a solution while the vibration fins 47 move ups and downs. In Figs. 4 and 5, the vibration fin type stirring device 32 vibrates at 1 to 20 Hz and vibration fins 47 stir iced water in the tank 34. The form and the dimension of the fins 47 can be selected according to the size of the tank 34. In Fig. 4, a mechanism to discharge the solution in the tank 34 is not shown.

Fig. 6 is a schematic diagram illustrating an example of the typical rotation blade type stirring devices. In Fig. 6, 50 represents iced water, 51 represents a device of dropping concentrated sulfuric acid solution of titanyl phthalocyanine, 53 represents a rotation blade system stirring device, 54 represents a tank, and 55 represents a cooling jacket. A mechanism to discharge the solution in the tank 34 is not shown in Fig. 6. It is possible to uniformly stir a solution in the tank 54 even with this type of device when the position and the angle of the stirring device are adjusted.

In either case of the device illustrated in Fig. 4 and the device illustrated in Fig. 6, it is preferred to maintain the state of the point constant where the titanyl phthalocyanine concentrated sulfuric acid solution drops. It is effective to enclose the point with a net to prevent ice from gathering around the point. It is good to add to iced water alcohols such as methyl alcohol and ethyl alcohol or glycerin in an amount of not greater than 5 % . It is also possible to add sodium chloride in an amount of not greater than 5 % to iced water. Especially, there is an advantage to the stirring device illustrated in Fig. 4 in that the device can entirely stir a solution in the tank without generating an eddy caused by stirring. In addition, when the tank has a box form, it is possible to fully stir the solution to the corners thereof.

### [Preparation of liquid for application for use in electrophotographic image bearing member]

Next, the liquid for application for use in electrophotographic image bearing member in the present invention, i.e., the liquid for application for use in forming a charge generating layer, is described below.

As mentioned above, the liquid for application for use in electrophotographic image bearing member (hereinafter referred to as a liquid for application for a charge generating layer) in the present invention is a dispersion liquid containing a binder resin, the titanyl phthalocyanine mentioned above and a solvent. When this dispersion liquid is prepared, it is extremely important to disperse powder of titanyl phthalocyanine having a regular tetrahedron form without greatly destroying the form of the primary particle thereof. When the stress during dispersion is strong, titanyl phthalocyanine having a regular tetrahedron form is completely destroyed such that there is no trace of its original form. For example, even when such titanyl phthalocyanine has an X-ray diffraction spectrum such that a main peak is observed at a Bragg (2θ) angle of 27.3 ± 0.2 °C, the durability of an electrophotographic image bearing member formed by using such titanyl phthalocyanine deteriorates while the image bearing member is repetitively used, resulting in degradation of chargeability and increase in the residual potential of the image bearing member. Therefore, it is good to perform dispersion in which titanyl phthalocyanine is fractured such that at least 15 % of its base regular tetrahedron form remains and the fractured form has a side of from 0.1 to 1 µm.

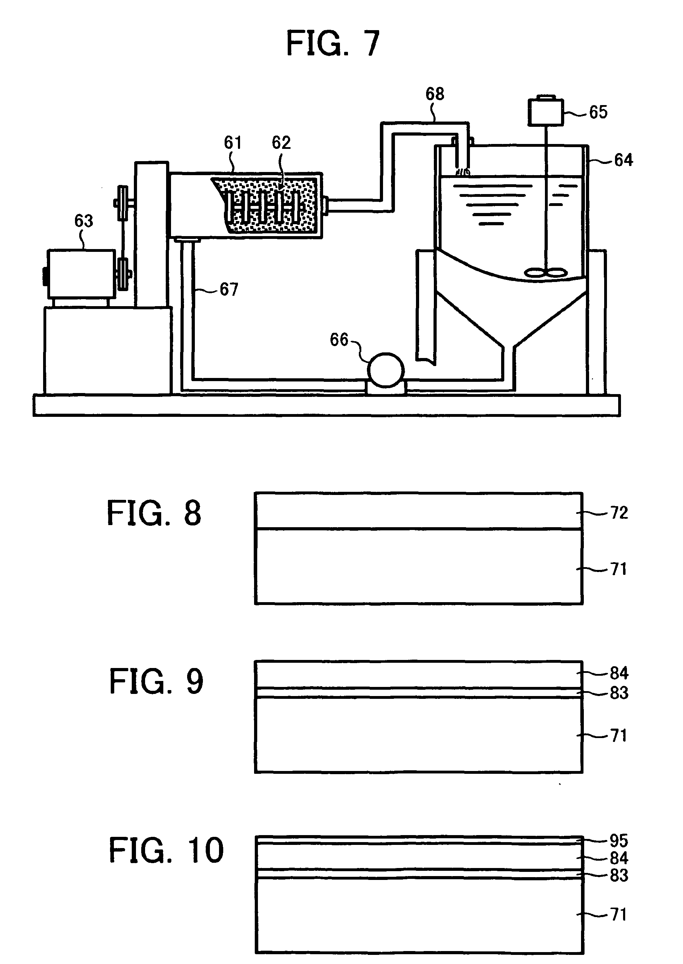

Fig. 7 is a schematic diagram illustrating an example of the dispersion device for use in dispersing titanyl phthalocyanine when a dispersion solution as a charge generating liquid for application is prepared.

In Fig. 7, a rotor 62 and beads for dispersion are provided inside a dispersion space 61. The rotor 62 rotates at a high speed. The beads are zirconia beads having a diameter of from 0.3 to 1 mm. Numeral 64 represents a circulation tank in which a liquid (liquid matter formed of a binder resin, Y type titanyl phthalocyanine and a solvent) to be dispersed is stored. Numeral 65 represent a mechanism by which the solution in the circulation tank 64 is stirred. Numeral 66 represents a pump to send the tank in the circulation tank 64 to the dispersion space 61. In Fig. 7, the dispersion space 61 and the circulation tank 64 are illustrated in a partially cut manner. In addition, a jacket (not shown) is provided to each of the dispersion space 61 and the circulation tank 64 to cool down by flowing water. Thereby, the dispersion solution can be cooled down by flowing the cooling water to the jacket. In addition, numeral 67 is a liquid sending piping and 68 represents a liquid retrieving piping.

A liquid for application for charge generating layer is prepared by as follows using the dispersion device described above: Put a liquid matter (hereinafter referred to as liquid) formed of Y type titanyl phthalocyanine, a binder resin, and a solvent in the circulation tank 64; Operate the liquid sending pump 66 to send the liquid to the dispersion space 61; Rotate the motor 63 to rotate the rotor 62 in the dispersion space 61 at a high speed; and fracture the Y type titanyl phthalocyanine in the dispersion space 61. The liquid in the dispersion space 61 flows back to the circulation tank 64 by way of the liquid retrieving liquid piping 68 and is stirred with the liquid in the circulation tank 64. It is preferred that the particle diameter of Y type titanyl phthalocyanine firstly put in the circulation tank 64 is not greater than the diameter of the beads for use in dispersion. Dispersion is performed only in the dispersion space 61 while the liquid in the circulation tank 64 circulates in the dispersion device by the liquid sending pump 66. Therefore, it takes a considerable time according to the amount of dropped solution before the liquid accumulating in the circulation tank 64 is uniformly dispersed.

When a liquid for application for charge generating layer in which Y type titanyl phthalocyanine (i.e., charge generating material particle) having a diameter of not less than 2 µm is present is used to form an electrophotographic image bearing member, such an image bearing member may cause point omission in images obtained. To obtain a liquid for application for charge generating layer having excellent quality, dispersion liquid is prepared in which charge generating material particles having a diameter of not less than 2 µm are not present. In the present invention, considering the various kinds of affects, dispersion is performed such that the maximum particle diameter of charge generating material in a liquid for application for charge generating layer is not greater than 1 µm. The dispersion condition is that the speed of the tip of the rotor 62 in the dispersion space 61 is preferably not less than 10 m/sec. When the speed is too high, the stress during dispersion tends to be too strong. In such a case, a portion of Y type titanyl phthalocyanine is changed to A type titanyl phthalocyanine. The number of rotation of the rotor 62 is not necessarily to be constant during dispersion and can vary in the middle of dispersion. The temperature of the liquid discharged from the dispersion space 61 during dispersion is carefully observed. When the temperature rises 5 °C or more higher than the temperature when the dispersion starts, the number of rotation of the rotor 62 is preferably lowered.

In addition, the speed of the amount of the liquid sent by the liquid sending pump 66 is not necessarily to be constant during dispersion, and can vary in the middle of dispersion. The density of the solid portion is not necessarily to be constant during dispersion. For example, it is allowed that firstly an organic solvent solution containing a resin is set in a dispersion device, secondly a half amount of the determined titanyl phthalocyanine is set and after a short-time dispersion, the remaining of the determined titanyl phthalocyanine is set. It is preferred to dispose the outlet and the inlet of the liquid provided to the dispersion space 61 not on the same side but on the opposing side. By having such a structure, it is possible to perform dispersion without slack and accumulation of the liquid. Zirconium oxide is preferred as a material for the dispersion space 61 and the rotor 62. Metals such as SUS and steel are not preferred for use because metal powder may be mingled in a dispersion liquid.

The liquid for application for charge generating layer (i.e., liquid for application for use in electrophotographic image bearing member) prepared as described above has a good dispersion property and crystal stability. Therefore, the liquid for application is easy to handle and can stably form a charge generating layer on an electroconductive substrate over an extended period of time. Thereby, it is possible to obtain an electrophotographic image bearing member having stable characteristics in which chargeability does not deteriorate and the residual potential does not rise for repetitive use.

Below is a description of an electrophotographic image bearing member having at least a charge generating layer on an electroconductive substrate with reference to drawings.

Fig. 8 is a schematic diagram illustrating an example of the structure of the electrophotographic image bearing member. In Fig. 8, a photosensitive layer 72 having a single layer mainly formed of a charge generating material and a charge transport material is provided on an electrconductive substrate 71. Figs. 9 and 10 are schematic cross sections illustrating an example of another structure of the electrophotographic image bearing member of the present invention. The electrophotographic image bearing member illustrated in Fig. 9 has a structure in which a charge generating layer 83 mainly formed of a charge generating material and a charge transport layer 84 mainly formed of a charge transport material are accumulated. The electrophotographic image bearing member illustrated in Fig. 10 has a structure in which a protective layer 95 is further accumulated on the charge transport layer 84 of Fig. 9.

Materials having a volume resistance of not greater than 10¹⁰ Ωcm can be used as a material for the electroconductive substrate 71 mentioned above. For example, plastic or paper having a film form or cylindrical form covered with a metal such as aluminum, nickel, chrome, nichrome, copper, gold, silver, and platinum, or a metal oxide such as tin oxide and indium oxide by depositing or sputtering can be used. Also a board formed of aluminum, aluminum alloy, nickel, and stainless can be used and a tube the surface of which is treated by cutting, super finishing and glinding after a raw tube is formed by a crafting technique such as extruding and extracting the board mentioned above can be used. In addition, endless nickel belt and endless stainless belt described in JOP S52-36016 can be used as the electroconductive substrate 71.

Further, the electroconductive substrate 71 of the present invention can be formed by forming an electroconductive layer in which electroconductive powder is dispersed in a suitable binder resin and the resultant is applied to the substrate.

Specific examples of such electrconductive powder include carbon black, acetylene black, metal powder such as aluminum, nickel, iron, nichrome, copper, zinc and silver, and metal oxide powder such as electroconductive tin oxide, and ITO.

Specific examples of the binder resins which are used together with the electroconductive powder include thermoplastic resins, thermocuring resins, and opticalcuring resins such as polystyrene, styrene-acrylonitrile copolymers, styrene-butadiene copolymer, styrene-anhydride maleic acid copolymer, polyester, polyvinyl chloride, vinyl chloride-vinyl acetate copolymer, polyvinyl acetate, polyvinylidene chloride, polyarylate (PAR) resin, phenoxy resin, polycarbonate, cellulose acetate resin, ethyl cellulose resin, polyvinyl butyral, polyvinyl formal, polyvinyl toluene, poly-N-vinyl carbazole, acryl resin, silicone resin, epoxy resin, melamine resin, urethane resin, phenol resin, and alkyd resin.

Such an electroconductive layer can be formed by dispersing the electroconductive powder and binder resins mentioned above in a suitable solvent such as tetrahydrofuran (THF), dichloromethane (MDC), methyl ethyl ketone (MEK), and toluene and applying the resultant to a substrate. Also, the electroconductive layer of the electroconductive substrate 71 of the present invention can be formed by a heat contraction rubber formed on a suitable cylindrical substrate, which contains the electroconductive powder mentioned above in a material such as polyvinyl chloride, polypropylene, polyester, polystyrene, polyvinylidene chloride, polyethylene, chloride rubber, and TEFLON ®.

Next, the photosensitive layer is described. As mentioned above, the photosensitive layer can be single-layer structured or multiple-layer structured. For convenience of description, the case in which the charge transport layer 84 is accumulated on the charge generating layer 83 is described first. The charge generating layer 83 is formed by applying to the electrocodncutive substrate 71 and drying a liquid for application containing a binder resin, titanyl phthalocyanine obtained by the method mentioned above, and a solvent. Therefore, the formed charge generating layer 83 has an X-ray diffraction spectrum such that a distinctive main peak is observed at a Bragg (2θ) angle of 27.3 ± 0.2 °. The formed charge generating layer 83 also contains titanyl phthalocyanine crystals having a pseudo-regular tetrahedron form in which at least 15 % of its base regular tetrahedron form having a side of from 0.1 to 1 µm remains. The ratio of the crystal having the pseudo-regular tetrahedron form is preferably not less than 25 %.

Specific examples of the binder resins for use in the charge generating layer 83 include polyvinyl butyral, polyvinyl formal, polyamide, polyurethane, epoxy resins, polyketone, polycarbonate, silicone resins, acryl resins, polyvinyl ketone, polystyrene, polysulfone, poly-N-vinyl carbazole, polyacrylic amide, polyvinyl benzal, polyester, phenoxy resins, vinyl chloride-vinyl acetate copolymer, polyvinyl acetate, polyphenylene oxide, polyamide, polyvinyl pyridine, cellulose-based resins, casein, polyvinyl alcohol, and polyvinyl pyrrolidone. The amount of the binder resin is 20 to 200 parts by weight, and preferably from 50 to 150 parts by weight based on 100 parts by weight of the charge generating material.

Especially, it is preferred that the charge generating layer 83 contains a butyral based resin with less than 70 mol % butyralization, and/or a butyral based resin with less than 15 mol % formalization. These butyral based resins are preferably formed of a polymer of a vinyl compound or its copolymer resin. By using such a binder resin, a stable liquid for application having a good dispersability and easy handling property can be obtained. Thereby, even when an image bearing member formed by using the liquid for application is repetitively used for an extended period of time, quality and stable electrophotographic images can be obtained.

Specific examples of the usable solvents include isopropanol, acetone, methylethyl ketone, cyclohexanone, tetrahydrofuran, dioxane, ethylcellosolve, ethyl acetate, methyl acetate, dichloromethane, dichloroethane, monochlorobenzene, cyclohexane, toluene, xylene, and ligroin.

Specific examples of application methods of the liquid for application mentioned above include dip coating methods, spray coating methods, beat coating methods, nozzle coating methods, spinner coating methods, and ring coating methods. The thickness of the charge generating layer 83 is suitably from 0.01 to 5 µm and preferably from 0.1 to 2 µm.

If desired, a plasticizer, a leveling agent, an oxidant inhibitor, etc., can be added to the charge generating layer 83. Specific examples of such leveling agents include silicone oils such as dimethyl silicone oil, and methyl phenyl silicone oil, and a polymer or an oligomer having one or more perfluoroalkyl groups. The amount of use thereof is suitably about 0 to about 1% by weight based on the binder resin.

On the other hand, the charge transport layer 84 is formed by applying a solution to the charge generating layer 83 and drying the solution. The solution is formed by dissolving or a dispersing a charge transport material and a binder resin in a suitable solvent. The charge transport material is classified into a positive hole transport material and an electron transport material and both types can be used.

Specific examples of the electron transport materials include electron acceptance materials such as chloroanil, bromoanil, tetracyanoethylene, tetracyanodimethane, 2,4,7-trinitro-9-fluorenone, 2,4,5,7-tetranitro-9-fluorenone, 2,4,5,7-tetranitroxantone, 2,4,8-trinitrothioxantone, 2,6,8-trinitro-4H-indeno[1,2-b]thiophene-4-on, 1,3,7-trinitrodibenzothiophene-5,5-dioxide, and benzoquinone derivatives

Specific examples of the positive hole transport materials include poly-N-carbazole and its derivatives, poly-y-carbazolylethyl glutamate and its derivatives, pyrene-formaldehyde condensate and its derivatives, polyvinyl pyrene, polyvinyl phenanthrene, polysilane, oxazole derivatives, oxadiazole derivatives, imidazole derivatives, monoarylamine derivatives, diarylamine derivatives, triartl amine derivatives, stilbene derivatives, α-phneylstilbene derivatives, benzidine derivatives, diarylmethane derivatives, triaryl methane derivatives, 9-styryl anthracene derivatives, pyrazoline derivatives, divinyl benzene derivatives, hydrazone derivatives, indene derivatives, butadiene derivatives, pyrene derivatives, bis stilbene derivatives, enamin derivatives and other known materials. These charge transport materials can be used alone or in combination.

Specific examples of the binder resins for use in forming a charge transport layer include thermoplastic resins, and thermocuring resins such as polystyrene, styrene-acrylonitrile copolymers, styrene-butadiene copolymer, styrene-anhydride maleic acid copolymer, polyester, polyvinyl chloride, vinyl chloride-vinyl acetate copolymer, polyvinyl acetate, polyvinylidene chloride, polyarylate, phenoxy resin, polycarbonate, cellulose acetate resin, ethyl cellulose resin, polyvinyl butyral, polyvinyl formal, polyvinyl toluene, poly-N-vinyl carbazole, acryl resin, silicone resin, epoxy resin, melamine resin, urethane resin, phenol resin, and alkyd resin.

The amount of such a charge transport material is 20 to 300 parts by weight, and preferably 40 to 150 parts by weight based on 100 parts by weight of a binder resin. The thickness of the charge transport layer 84 is preferably about 5 to about 50 µm. Specific examples of the solvents used include tetrahydrofuran, dioxane, toluene, dichloromethane, monochlorbenzene, dichloroethane, cyclohexanone, methylethyl ketone, and acetone.

In addition, polymer charge transport materials which can function as a charge transport material and a binder resin can be preferably used in the charge transport layer 84. The charge transport layer 84 formed of these polymer charge transport materials has an excellent anti-abrasion property. Any known materials can be used as the polymer charge transport materials and especially polycarbonate having a triaryl amine structure in its main and/or side chain can be suitably used. For example, JOP 2000-103984 describes such polymer charge transport materials represented by chemical formulae (1) to (10).

In the present invention, a plasticizer and a leveling agent can be added to the charge transport layer 84. Typical known plasticizers for resins such as dibutylphthalate, and dioctyl phthalate can be used as the plasticizer. The amount of use of such a plasticizer is about 0 to about 30 % by weight based on a binder resin. As such leveling agents, silicone oils such as dimethyl silicone oil, and methyl phenyl silicone oil and polymers or oligomers having one or more perfluoroalkyl groups in its side chain can be used and the amount of use thereof is preferably about 0 to about 1 % by weight based on a binder resin.

Next, the case in which the photosensitive layer is formed of a single layer as illustrated in Fig. 8 is described.

The photosensitive layer 72 formed of a single layer is formed by applying to the electroconductive substrate 71 and drying a liquid for application containing a binder resin, titanyl phthalocyanine obtained by the method mentioned above, and a solvent. Further, this photosensitive layer can be a type of function separation in which the charge transport material is added to the photosensitive layer. In addition, if desired, a plasticizer, a leveling agent, and an oxidation inhibitor can be added thereto. Therefore, the photosensitive layer 72 formed of a single layer contains titanyl phthalocyanine having an X-ray diffraction spectrum such that a main peak is observed at a Bragg (2θ) angle of 27.3 ± 0.2 °. The titanyl phthalocyanine contains crystals having a regular tetrahedron form having a side of from 0.1 to 1 µm and crystals having a pseudo-regular tetrahedron form in which at least 15 % of its base regular tetrahedron form remains. The total volume of the mixture of the crystals mentioned above occupies at least 25 % of all the titanyl phthalocyanine based on volume.

As the binder resin mentioned above, the binder resins mentioned for the charge transport layer 84 can be used and further the binder resins mentioned for the charge generating layer 83 can be mixed therewith. Also the polymer charge transport material can be suitably used. The amount of the charge generating material is preferably 5 to 40 parts by weight based on 100 parts by weight of a binder resin. The amount of the charge transport material is preferably 0 to 190 parts by weight, and more preferably 50 to 150 parts by weight based on 100 parts by weight of a binder resin. The photosensitive layer 72 formed of a single layer can be formed by applying an application to a substrate by a method such as a dip coating method, a spray coating method, and a bead coating method. The liquid for application is formed by dispersing a charge generating material, a binder resin and optionally a charge transport material in a solvent such as tetrahydrofuran, dioxane, dichloroethane, and cyclohexane with a dispersion device, etc. The suitable thickness of the photosensitive layer formed of a single layer is about 5 to about 100 µm.

The electrophtography image bearing member of the present invention can have an undercoat layer between an electroconductive substrate and a photosensitive layer. Typically, the undercoat layer is mainly formed of a resin. Considering that the photosensitive layer is applied like an undercoat layer, it is preferred that such a resin is hardly insoluble to a typical organic solvent. Specific examples of such resins include water-soluble resins such as polyvinyl alcohol, casein, and polyacrylic acid sodium, alcohol-soluble resins such as copolymeric nylon and methoxy methylized nylon, curing-type resins having a three dimensional mesh structure such as polyurethane, melamine resins, phenol resins, alkyd melamine resins, and epoxy resins. In addition, such an undercoat layer can contain fine powder of metal oxides such as titanium oxide, silica, alumina, zirconium oxide, tin oxide, and indium oxide to prevent moiré or reduce the residual potential. This undercoat layer can be formed using suitable solvents and application methods as in the case of the photosensitive layer mentioned above.

Further, silane coupling agents, titan coupling agents, chrome coupling agents, etc., can be used in the undercoat layer of the present invention. Additionally, the undercoat layer of the present invention can be suitably formed by positive-electrode oxidizing Al₂O₃, or providing an organic matter such as polyparaxylylene (parylene) or an inorganic matter such as SiO₂, SnO₂, TiO₂, ITO and CeO₂ by a vacuum thin layer manufacturing method. In addition, any other known materials can be used. The thickness of the undercoat layer is preferably 0 to 5 µm.

As illustrated in Fig. 10, the electrophotographic image bearing member of the present invention can have the protective layer 95 on the photosensitive layer 84 to protect the photosensitive layer 84.

Specific examples of materials for use in the protective layer 95 include resins such as ABS resins, ACS resins, olefin-vinyl monomer copolymers, chlorinated polyether, allyl resins, phenol resins, polyacetals, polyamide, polyamide imide, polyacrylate, polyallylsulfon, polybutylene, polybutylene terephthalate, polycarbonate, polyether sulfon, polyethylene, polyethylene terephthalate, poimide, acryl resins, polymethyl pentene, polypropylene, polyphenyl oxide, polysulfon, polystyrene, AS resins, butadiene-styrene copolymers, poly urethane, polyvinyl chloride, polyvinylidene chloride, and epoxy resins. In addition, to the protective layer 95, fluorine resins such as polytetrafluoroethylene, silicone resins and materials in which an inorganic material such as titanium oxide, tin oxide, and titanic acid kalium is dispersed in these resins can be added to improve anti-abrasion property.

Typical application methods are adopted to form the protective layer 95. The suitable thickness of the protective layer 95 is about 0.1 to about 7 µm. In addition, known materials such as α-C, and α-SiC formed by a vacuum thin layer manufacturing method can be used to form the protective layer 95.

Further, in the present invention, it is possible to provide an intermediate layer between a photosensitive layer and a protective layer. Typically, a binder resin is mainly used in such an intermediate layer. Specific examples of these resins include polyamide, alcohol-soluble nylon, hydroxyl polyvinyl butyral, polyvinyl butyral and polyvinyl alcohol. Typical methods mentioned above are used to form an intermediate layer. The suitable thickness of the intermediate layer is about 0.05 to about 2 µm.

The electrophotographic image bearing member having the structure mentioned above has a high sensitivity. The chargeability thereof does not deteriorate and the residual potential does not rise even when such an electrophotograph is repetitively used. Therefore, when this image bearing member is provided to an electrophotographic apparatus, it is possible to obtain quality and stable electrophotographic images against high speed printing for an extended period of time.

Below are detailed descriptions of the electrophotographic apparatus and electrophotographic forming methods of the present invention with reference to the drawings.

### [Electrophotographic apparatus]

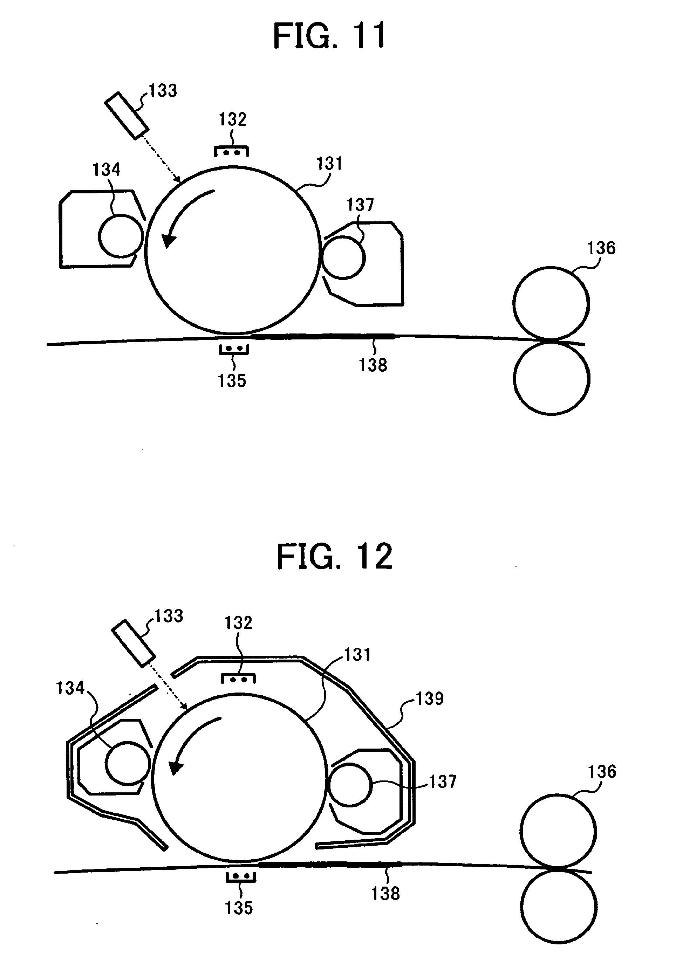

Fig. 11 is a schematic structure diagram illustrating an example of the electrophotographic apparatus and the elelctrophotographic recording method of the present invention. The variation examples described later are within the scope of the present invention.

In the electrophotographic apparatus illustrated in Fig. 11, there are provided around an electrophotographic image bearing member 131 having a drum form a charging mechanism 132 functioning as a charging device, an irradiation mechanism 133 functioning as an irradiation device, a development mechanism 134 functioning as a development device, a transfer mechanism 135 functioning as a transfer device, and a cleaning mechanism functioning as a cleaning device. At the transfer mechanism 135, toner is transferred to a transfer material 138 and the toner is fixed by a fixing mechanism 136.

In the electrophotographic forming method using the electrophotographic apparatus, the electrophootgraphic image bearing member 131 rotates counterclockwise, is negatively or positively charged by the charging mechanism 132, and forms a latent electrostatic image on the electrophotographic image bearing member 131 by irradiation from a light source of the irradiation mechanism 133. Thereafter, the development is performed by the development mechanism 134 and the transfer is performed by the transfer mechanism 135. This cycle is repeated.

Known charging devices such as a corotron, a scorotron, a solid state charger and a charging roller can be used as the charging mechanism 132. In addition, as for the transfer mechanism 135, typical chargers can be used and it is effective to use a charger in which a transfer charger and a separation charger are used in parallel.

Specific examples of the light source (not shown) of the irradiation mechanism 133 include light-emitting materials such as a fluorescent lamp, a tungsten lamp, a halogen lamp, a mercury lamp, a sodium lamp, a light emitting diode (LED), a semiconductor laser (LD), and an electroluminescence (EL). Various kinds of filters such as sharp cut filters, bandpass filters, near infrared cut filters, dichroic filters, interference filters and color temperature conversion filters can be used to perform irradiation with light in the desired wavelength range. Such light sources can be used not only in the case illustrated in Fig. 11 but also in the process such as a transfer process, quenching process, a cleaning process or a pre-irradiation process when such a process is provided and used in combination with irradiation to the image bearing member. It is preferred that the wavelength of the writing light source for use in the irradiation device 133 is not longer than 800 nm. The light source is formed of multiple light sources with a space between each of them being preferably not greater than 5 µm.

When image irradiation is performed to an image bearing member with positive or negative charging, a positive or negative-charged latent electrostatic image is formed on the image bearing member. When the image is developed with a toner (electroscopic fine powder) reversely charged to the latent image, a positive image is obtained. When the image is developed with a toner (electroscopic fine powder) charged with the same polarity to that of the latent image, a negative image is obtained. In such development, known methods can be used. Known methods can be also used for the quenching device.

In the case illustrated in Fig. 11, an electroconductive substrate having a drum form is shown. An electroconductive substrate having a sheet form or an endless belt form can be also used. As a charger prior to cleaning, known charging devices such as a corotron, a scorotron, a solid state charger and a charging roller can be used. In addition, typically, the charging devices mentioned above can be used as a transfer charger and a separation charger. As for a cleaning mechanism, known brushes and polyurethane blades such as a fur brush and a magfur brush can be used.

The image forming device of the present invention as described above not only can be fixedly provided in a photocopier, a facsimile machine, and a printer but also can be provided therein as a form of a process cartridge. The process cartridge is a device (part) containing integrally supported members of an image bearing member, and at least one of the devices selected from the group consisting of a charging device, an irradiating device, a development device, a transfer device, a cleaning device and a quenching device. The process cartridge is detachably attached to the main body of an electrophotograpic apparatus.

There are variations in the form of the process cartridge. Fig. 12 is a diagram illustrating an example of the typical process cartridge. The process cartridge illustrated in Fig. 12 contains an electrophtographic image bearing member 131 around which a charging mechanism 132, a developing mechanism 134, and a cleaning mechanism 137 are provided. The light source of an irradiation mechanism 133 and a transfer mechanism 135 can be optionally contained in the process cartridge although the process cartridge illustrated in Fig. 12 does not contain these devices. In Fig. 12, 139 represents a process cartridge. That is, when a process cartridge contains integrally supported members of an electrophotographic image bearing member and at least one of the devices selected from the group consisting of a charging device, an irradiating device, a development device, a transfer device, a cleaning device and a quenching device while the process cartridge is detachably attached to the main body of an electrophotographic apparatus, the electrophotographic apparatus can be structured in a compact manner. Further, it is possible to perform an easy and sure maintenance operation. Furthermore, part exchange becomes easy, and quality and stable electrophotographic images can be formed for an extended period of time for high speed printing.

Having generally described preferred embodiments of this invention, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

The present invention is now described further in detail with reference to examples but is not limited thereto.

### Example 1

Phthalocyanine used as a dye was prepared as follows and a liquid for application for a charge generating layer was prepared using the phthlocyanine. Separately, a liquid for application for an undercoat layer and a liquid for application for a charge transport layer were prepared. An elelctrophotographic image bearing member was manufactured by using this liquid for application.

### [Preparation of phthalocyanine]

Phthalocyanine was prepared as follows: Stir and mix 525 parts of phthalodinitrile and 4,000 parts of 1-chloronaphthalene at 25 °C; Drop 190 parts of tetrachloro titan to the mixture in a nitrogen air flow; Subsequent to dropping, heat the resultant gradually to 200 °C; Stir the resultant for 5 hours while keeping the reaction temperature between 190 to 210 °C; When finished with the reaction, cool the resultant to 130 °C and filtrate the resultant; Wash the resultant with 1-chloronaphthalene until the powder shows a color of blue; Wash the powder with methanol several times; Wash the resultant with 80°C hot water several times; Dry the resultant to obtain 422 parts of coarse titanyl phthalocyanine; Dissolve 60 parts of the coarse titanyl phthalocyanine obtained after hot water washing treatment in 1,000 part of 96 % sulfuric acid at 3 to 5 °C while stirring; and filtrate the resultant with a TEFLON® filter;

Next, put 3,500 parts of iced water in a stirring device having the same structure as that illustrated in Fig. 4; Cool the iced water by flowing -5 °C cooling liquid in the cooling jacket while stirring the iced water with the vibration motor with an frequency of 3 Hz and an amplitude of 5 mm; Drop the coarse titanyl phthalocyanine sulfuric acid solution as prepared above at a speed of 0.7 g/sec in the 3,500 parts of the iced water while stirring to precipitate the crystal of titanyl phthalocyanine: Filtrate the precipitated crystal; Wash the crystal with water until the washing water shows neutral to obtain water paste of titanyl phthalocyanine; Add 1,500 parts of 1, 2-dichloroethane to this water paste; Stir the resultant for 2 hours at room temperature; Add 2,500 parts of methanol and stir and filtrate the resultant; Wash the resultant with methanol; and dry the resultant under a reduced pressure to obtain 49 parts of titanyl phthalocyanine.

The thus obtained titanyl phthalocyanine was powder form and not hardened nor condensed. Titanyl phthalocyanine is a dye.

X-ray diffraction spectrum was measured for the titanyl phthalocyanine manufactured by the method as mentioned above as a dye under the following conditions.

### [Measuring conditions]

X ray tube: Cu
Voltage: 40 Kv
Current: 20 mA
Scanning speed: 1 °/min
Scanning range: 3 ° - 40 °
Time constant: 2 sec

It was confirmed that the titanyl phthalocyanine had an X-ray diffraction spectrum such that at least a main peak was observed at a Bragg (2θ) angle of 27.3 ± 0.2 °

### [Preparation of liquid for application for charge generating layer]

A liquid for application for charge generating layer was prepared as follows: Dissolve 250 parts of butyral resin in 5000 parts of 2 butanone; Filtrate the liquid with a TEFLON® filter having an average mesh diameter of 0.5 µm; Add 370 parts of the titanyl phthalocyanine obtained as mentioned above to the liquid and fully stir the liquid; Put the resultant in the circulation tank in the dispersion device having the same structure as illustrated in Fig. 7; Fill sphere form zirconium oxide having a diameter of 0.5 mm in the dispersion space of the dispersion device to 50 % of the volume of the dispersion space; Rotate the dispersion device at 1, 500 rpm (the speed of the tip of the rotor: 9.1 m/sec) to perform dispersion for 10 minutes while circulating the dispersion liquid and controlling the temperature thereof in the range of from 25 to 30 °C; Subsequent to dispersion, remove the dispersion liquid from the dispersion device to distil with 2 butanone; Filtrate the liquid with a TEFLON® filter having an average mesh diameter of 0.5 µm to prepare a liquid for application for charge generating layer.

### [Preparation of liquid for application for undercoat layer]

The following recipe for a liquid for application for undercoat layer were set in a ball mill and dispersed to prepare a liquid for application for undercoat layer.

### [Recipe for liquid for application for undercoat layer]

Powder of titanium dioxide: 15 parts
Polyvinyl butyral: 6 parts
2-butanone: 150 parts

### [Preparation of liquid for application for charge transport layer]

The following recipe for liquid for application for charge transport layer was dissolved and the resultant was filtrated with cotton filter having an average mesh diameter of 1 µm to prepare a liquid for application for charge transport layer.

### [Recipe for liquid for application for charge transport layer]

Polycarbonate: 10 parts
Methylene chloride: 80 parts
Charge transport material having the following chemical formula (1): 7 parts

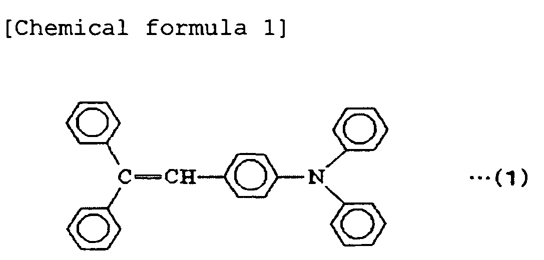

### [Manufacturing of electrophotographic image bearing member]

An electrophotographic image bearing member was manufactured as follows: Clean an aluminum tube having an outer diameter of 30 mm, a thickness of 0.9 mm and a length of 340 mm; Apply the liquid for application for an undercoat layer to the aluminum tube by a dip coating method; Dry the tube for 30 minutes at 120 °C to form an undercoat layer having a thickness of 3 µm; Put the liquid for application for a charge transport layer in an application tank to perform dip coating application; and dry the resultant to form a charge transport layer having an about 28 µm.

The electrophotographic image bearing member of Example 1 was thus obtained.

### Example 2

The electrophotographic image bearing member of Example 2 was obtained in the same manner as described in Example 1 using the liquid for application for a charge generating layer, the liquid for application for an undercoat layer, and the liquid for application for a charge transport layer except that, instead of the phthalocyanine of Example 1 used as a dye, phthalocyanine was manufactured under the following crystal precipitation conditions.

### [Preparation of phthalocyanine using a different crystal precipitation device]

Titanyl phthalocyanine for Example 2 was prepared using the device having the same structure as illustrated in Fig. 6 as follows: Drop the sulfuric acid solution of the coarse titanyl phthalocyanine manufactured in Example 1 at a speed of 0.7 g/sec to 35,000 parts of iced water while stirring to precipitate titanyl phthalocyanine crystal; Filtrate the precipitated crystal; Repeatedly wash the crystal with water until the washing water shows neutral to obtain aqueous paste of titanyl phthalocyanine; Add 1,500 parts of 1,2-dichloroethane to this aqueous paste and stir the resultant for 2 hours at room temperature; Add 2,500 parts of methanol thereto while stirring; Filtrate the resultant; Wash the resultant with methanol; and dry the resultant under reduced pressure to obtain 49 parts of titanyl phthalocyanine.

The thus obtained titanyl phthalocyanine was powder.

### Example 3

The electrophotographic image bearing member of Example 3 was obtained in the same manner as described in Example 1 using the liquid for application for an undercoat layer, and the liquid for application for a charge transport layer except that liquid for application for a charge generating layer was prepared under the following dispersion conditions.

### [Preparation of liquid for application for charge generating layer under different dispersion conditions]

A liquid for application for a charge generating layer for Example 3 was prepared as follows: Dissolve 250 parts of butyral resin in 5000 parts of 2-butanone; Filtrate the liquid with a TEFLON@ filter having an average mesh diameter of 0.5 µm; Add 370 parts of the titanyl phthalocyanine prepared in Example 1 to the liquid and fully stir the liquid; Put the resultant in the circulation tank in the dispersion device having the same structure as illustrated in Fig. 7; Fill sphere form zirconium oxide having a diameter of 0.5 mm in the dispersion space of the dispersion device to 50 % of the volume of the dispersion space; Rotate the dispersion device at 1,200 rpm (the speed of the tip of the rotor: 7.3 m/sec) to perform dispersion for 15 minutes while circulating the dispersion liquid and controlling the temperature thereof in the range of from 25 to 30 °C; Subsequent to dispersion, remove the dispersion liquid from the dispersion device to distil with 2-butanone at a ratio of 1 to 1 ; Filtrate the liquid with a TEFLON@ filter having an average mesh diameter of 0.5 µm to prepare a liquid for application for a charge generating layer.

### Example 4

The electrophotographic image bearing member of Example 4 was obtained in the same manner as described in Example 1 using the liquid for application for a charge generating layer, the liquid for application for an undercoat layer, and the liquid for application for a charge transport layer except that phthalocyanine manufactured under the following precipitation conditions was used instead of the titanyl phthalocyanine used as a dye in Example 1.

### [Preparation of titanyl phthalocyanine using a different crystal precipitation device under different crystal precipitation conditions]

Titanyl phthalocyanine for Example 2 was prepared using the device having the same structure as illustrated in Fig. 6 as follows: Drop the sulfuric acid solution of the coarse titanyl phthalocyanine manufactured in Example 1 at a speed of 1.0 g/sec to 35,000 parts of iced water while stirring to precipitate titanyl phthalocyanine crystal; Filtrate the precipitated crystal; Repeatedly wash the crystal with water until the washing water shows neutral to obtain aqueous paste of titanyl phthalocyanine; Add 1,500 parts of 1,2-dichloroethane to this aqueous paste and stir the resultant for 2 hours at room temperature; Add 2,500 parts of methanol thereto while stirring; Filtrate the resultant; Wash the resultant with methanol; and dry the resultant under reduced pressure to obtain 49 parts of titanyl phthalocyanine.

The thus obtained titanyl phthalocyanine was powder.

### Comparative Example 1

The electrophotographic image bearing member of Comparative Example 1 was obtained in the same manner as described in Example 1 using the liquid for application for a charge generating layer, the liquid for application for an undercoat layer, and the liquid for application for a charge transport layer except that phthalocyanine manufactured by dropping the concentrated sulfuric acid solution of the coarse titanyl phthalocyanine to water having a temperature of 3 °C instead of iced water using the stirrer having the same structure as illustrated in Fig. 4 was used instead of the titanyl phthalocyanine used as a dye in Example 1.

### Comparative Example 2

The electrophotographic image bearing member of Comparative Example 2 was obtained in the same manner as described in Example 1 using the liquid for application for an undercoat layer, and the liquid for application for a charge transport layer except that liquid for application for a charge generating layer was prepared under the following dispersion conditions.

### [Preparation of liquid for application for charge generating layer under different dispersion conditions]

A liquid for application for a charge generating layer for Example 3 was prepared as follows: Dissolve 250 parts of butyral resin in 5000 parts of 2-butanone; Filtrate the liquid with a TEFLON@ filter having an average mesh diameter of 0.5 µm; Add 370 parts of the titanyl phthalocyanine prepared in Example 1 to the liquid and fully stir the liquid; Put the resultant in the circulation tank in the dispersion device having the same structure as illustrated in Fig. 7; Fill sphere form zirconium oxide having a diameter of 0.5 mm in the dispersion space of the dispersion device to 50 % of the volume of the dispersion space; Rotate the dispersion device at 3,000 rpm to perform dispersion for 90 minutes while circulating the dispersion liquid and controlling the temperature thereof in the range of from 25 to 30 °C; Subsequent to dispersion, remove the dispersion liquid from the dispersion device to distil with 2-butanone at a ratio of 1 to 1 ; Filtrate the liquid with a TEFLON@ filter having an average mesh diameter of 0.5 µm to prepare a liquid for application for a charge generating layer.

### Comparative Example 3

The electrophotographic image bearing member of Comparative Example 3 was obtained in the same manner as described in Example 1 using the liquid for application for a charge generating layer, the liquid for application for an undercoat layer, and the liquid for application for a charge transport layer except that titanyl phthalocyanine prepared by the following method was used instead of the titanyl phthalocyanine manufactured in Example 1.

### [Preparation of titanyl phthalocyanine]

Titanyl phthalocyanine was prepared as follows: Disperse 33.3 g of phthalodinitrile in 208 ml of diphenyl methane in nitrogen atmosphere; Add 12.5 g of tetrachloroethane to the liquid at 40 °C; Thereafter, raise the temperature to 205 to 210 °C in one hour and react the resultant for 5 hours at 205 to 210 °C; Filtrate the resultant at 130 °C; Wash the resultant with diphenyl methane and methanol in this order; stir the resultant in 300 ml of N-methylpyrrolidone (NMP) at 140 to 150 °C twice; Subsequent to hot water suspension washing, in which powder of the resultant is suspended in hot water to wash the resultant with water, and methanol suspension washing, in which powder of the resultant is suspended in methanol to wash the resultant with methanol; Dry the resultant to obtain 26.9 g of titanyl phthalocyanine.

### Comparative Example 4

The electrophotographic image bearing member of Comparative Example 4 was obtained in the same manner as described in Example 1 using the liquid for application for charge generating layer, the liquid for application for undercoat layer, and the liquid for application for charge transport layer except that titanyl phthalocyanine prepared by the following method was used instead of the titanyl phthalocyanine manufactured in Example 1.

### [Preparation of titanyl phthalocyanine]

Titanyl phthalocyanine was prepared as follows: Disperse 33.3 g of phthalodinitrile in 208 ml of diphenyl methane in nitrogen atmosphere; Add 12.5 g of tetrachloroethane to the liquid at 40 °C; Thereafter, raise the temperature to 205 to 210 °C in 3 hours and react the resultant for 5 hours at 205 to 210 °C; and thereafter, the same process as in Example 1 was performed to obtain 28.5 g of titanyl phthalocyanine.

The shapes of the titanyl phthalocyanine contained in the liquids for application for a charge generating layer prepared as described above in Examples 1 to 4 and Comparative Examples 1 to 4 were observed under the following conditions with a transmission electron microscope (hereinafter referred to as TEM). In addition, each liquid for application for a charge generating layer was dried and solidified to measure their X-ray diffraction spectrum.

### [Observation with TEM]

The measurement of the shape and the dimensions of titanyl phthalocyanine was as follows: Distil part of the prepared liquid for application for a charge generating layer with deionizwed water to be about 1 % by weight; Scoop the surface thereof with a net which was electrically treated; and observe the particle size of titanyl phthalocyanine with a transmission electron microscope (H-9000NAR, manufactured by Hitachi Ltd.) with a power of 75,000.

Photos of the TEM observation results were taken and transmitted into a personal computer using a scanner. Thereafter, the images obtained were processed for determining their contour. The scanner used was GT-8500 manufactured by Seiko Epson Corporation and the personal computer took in the images as monochrome images having 256 tones. In addition, in the image processing for determining the contour, Scion Image manufactured by Scion Corporation was used. Various kinds of other image processing software, for example, NIH Image manufactured by US National Institute of Health, can be used other than Scion Image.

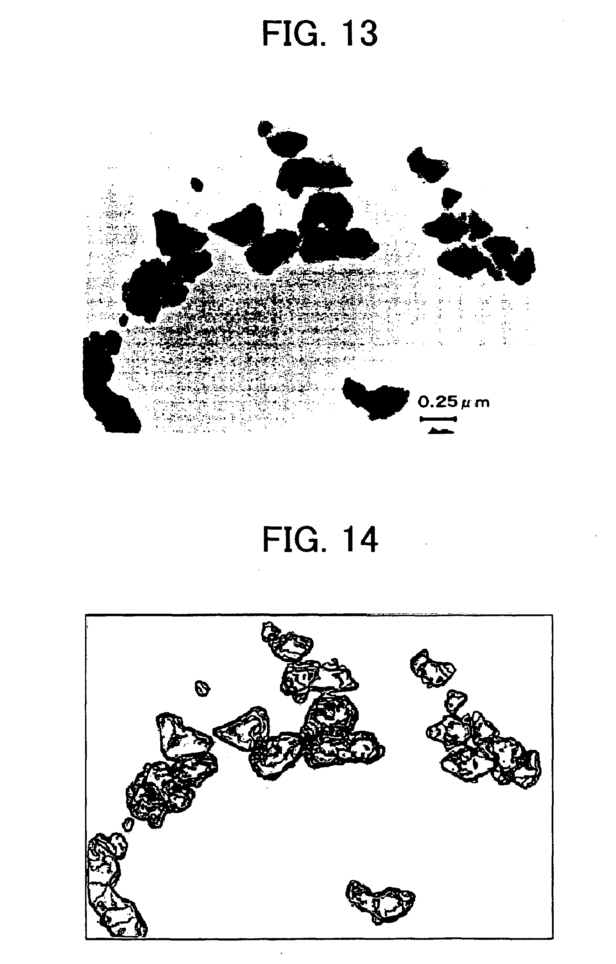

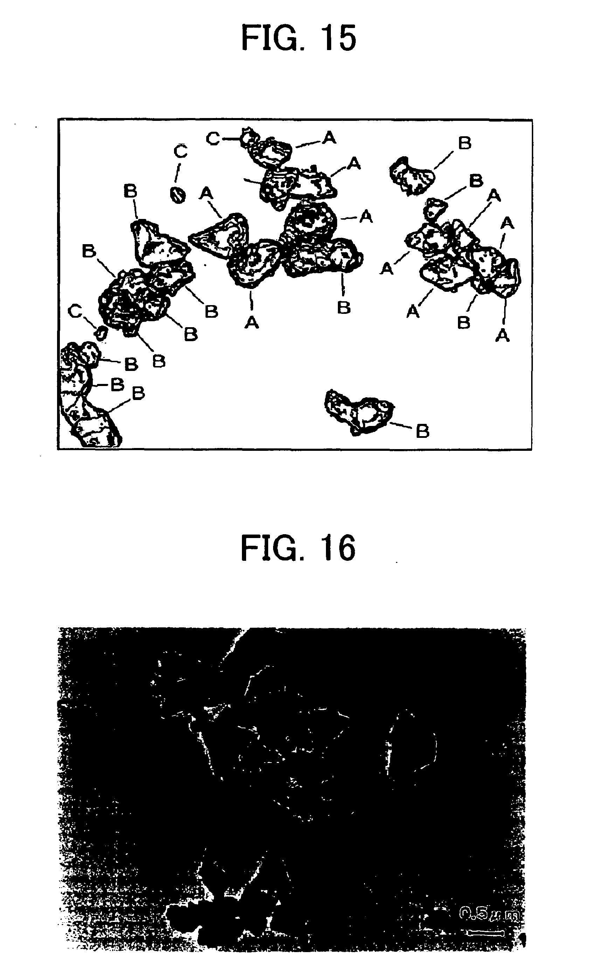

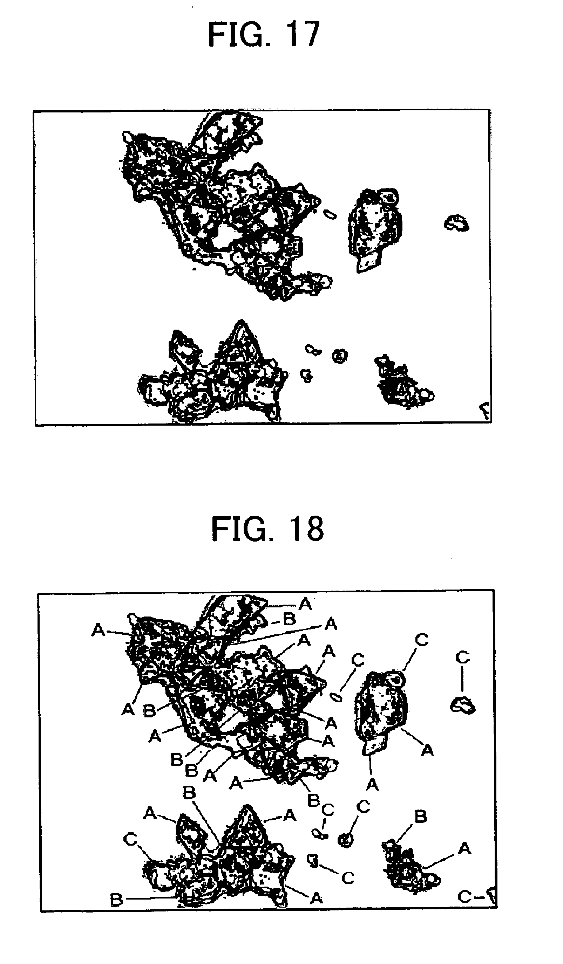

Fig. 13 is a TEM photo of the liquid for application for a charge generating layer of Example 1. Fig. 14 is an image obtained after image processing for contour determination. Fig. 15 is an image classified according to the shape of the image of Example 14. Similarly, Fig. 16 is a TEM photo of the liquid for application for a charge generating layer of Example 2. Fig. 17 is an image obtained after image-processing the TEM photo of Fig. 16 for contour determination. Fig. 18 is an image classified according to the shape of the image of Example 17.

That is, in the classification of shape illustrated in Figs. 15 and 18, A represents the shape which can be clearly determined as a tetrahedron, B represents the shape which can be hard to determine, and C represents the shape which is not a tetrahedron.

In Table 1, the total area of the crystal image of titanyl phthalocyanine observed in the observation photo taken by a transmission electron microscope was set to be 100. Among them, the total area of clearly determined as a regular tetrahedron was tetrahedron. For example, as to the observation result of Example 1, a regular tetrahedron form is determined to occupy about 60 % in the image of the titanyl phthalocyanine crystal observed in a transmission electron microscope photo.

In addition, when observing titanyl phthalocyanine with a transmission electron microscope, taking photos thereof and classifying the shape according to the photos, A represents a shape definitely determined as a triangle, B represents a shape which can be hard to determine, and C represents the shape which is not a triangle. Similarly, In Fig. 18, A represents a shape definitely determined as a triangle, B represents a shape which can be hard to determine, and C represents the shape which is not a triangle. The results of the shape of the crystal in the transmission electron microscope photo image are shown in Table 2.

### [X-ray diffraction spectrum measuring]

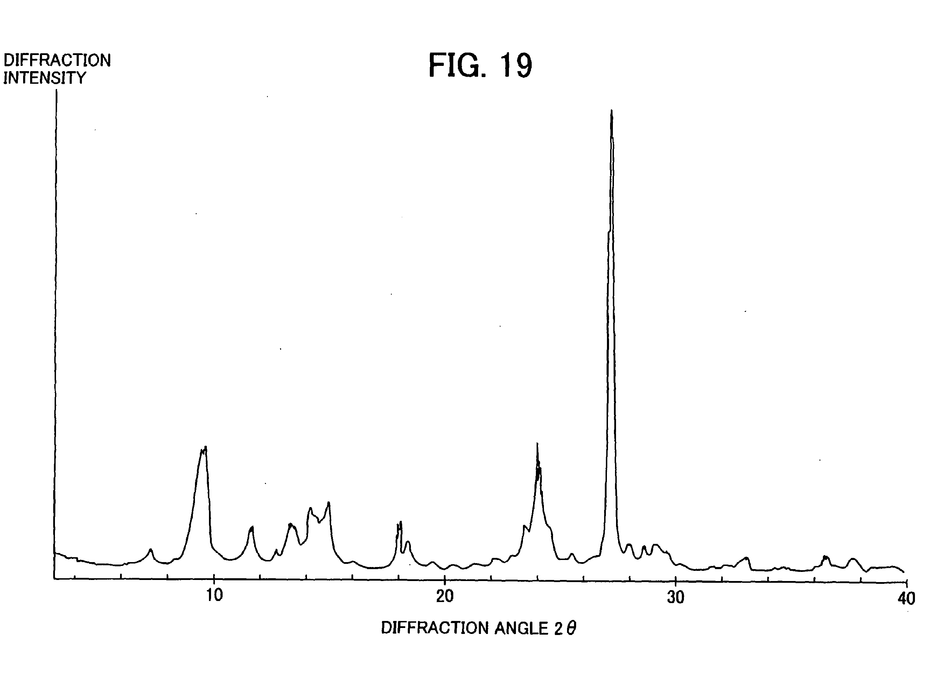

Measurement was performed under the conditions (X ray tube: Cu Voltage: 40 Kv, Current: 20 mA, Scanning speed: 1 °/min, Scanning range: 3 ° - 40 °, Time constant: 2 sec) shown in Example 1. Fig. 19 is the X-ray diffraction spectrum of the dried and solidified sample of the liquid for application for charge generating layer of Example 1. Similarly, X-ray diffraction spectrum of the dried and solidified sample of each liquid for application for charge generating layer was obtained and each diffraction peak for a Bragg angle (2θ) was measured. The diffraction peak at a Bragg (2θ) angle of 27.3 ± 0.2 ° (main diffraction peak of Y type titanyl phthalocyanine of the present invention was observed) and the diffraction peak at a Bragg (2θ) angle of 26.3 ± 0.2 ° (main diffraction peak of Y type titanyl phthalocyanine of the present invention was not typically observed but of A type titanyl phthalocyanine) are shown in Table 1 and Table 2.

**[Table 1]**

| Sample | Length of a side of tetra-hedron | Ratio of shapes obtained from the observation result of dispersion liquid using a transmission electron microscope (Volume % presumed based on electron microscope photo) | | | X-ray diffraction measuring result | |
|---|---|---|---|---|---|---|
| | | Tetra-hedron | Hard to determine | Not tetrahedron | Peak level at 27.3 | Peak level at 26.3 ° |
| Example 1 | 0.7 | About 60 % | About 20 % | About 20 % | Strongest | None |
| Example 2 | 0.6 | About 50 % | About 30 % | About 20 % | Strongest | None |
| Example 3 | 0.6 | About 60 % | About 20 % | About 20 % | Strongest | None |
| Example 4 | 0.1 | About 30 % | About 40 % | About 30 % | Strongest | None |
| Comparative Example 1 | 0.7 | About 10 % | About 40 % | About 60 % | Strongest | None |
| Comparative Example 2 | 0.7 | About 20 % | About 50 % | About 50 % | Strongest | About 3 % intensity based on that at 27.3 ° |
| Comparative Example 3 | - | None | About 30 % | About 60 % | Strongest | About 5 % intensity based on that at 27.3 ° |
| Comparative Example 4 | - | None | About 30 % | About 50 % | Strongest | None |

**[Table 2]**

| Sample | Length of a side of triangle | Ratio of shapes obtained from the observation result of dispersion liquid using a transmission electron microscope (Volume % presumed based on electron microscope photo) | | | X-ray diffraction measuring result | |
|---|---|---|---|---|---|---|
| | | Tetra-hedron | Hard to determine | Not tetrahedron | Peak level at 27.3 ° | Peak level at 26.3 ° |
| Example 1 | 0.7 | About 60 % | About 20 % | About 20 % | Strongest | None |
| Example 2 | 0.6 | About 50 % | About 30 % | About 20 % | Strongest | None |
| Example 3 | 0.6 | About 60 % | About 20 % | About 20 % | Strongest | None |
| Example 4 | 0.1 | About 30 % | About 40 % | About 30 % | Strongest | None |
| Comparative Example 1 | 0.7 | About 10 % | About 40 % | About 60 % | Strongest | None |
| Comparative Example 2 | 0.7 | About 20 % | About 50 % | About 50 % | Strongest | About 3 % intensity based on that at 27.3 ° |
| Comparative Example 3 | - | None | About 30 % | About 60 % | Strongest | About 5 % intensity based on that at 27.3 ° |
| Comparative Example 4 | - | None | About 30 % | About 50 % | Strongest | None |

Next, each of the electrophotographic image bearing member manufactured in Examples 1 to 4 and Comparative Examples 1 to 4 was mounted on an electrophotographic apparatus having the same structure as Fig. 11. The light source for image irradiation had a semiconductor laser (writing images using a polygon mirror) having a wavelength of 780 nm. A probe of a surface electrometer was inserted to measure the surface potential of the image bearing member just before development. A continuous run of 5,000 sheets was performed using the electrophotographic apparatus having the structure. The surface potentials at the image irradiation portion and image non-irradiation portion were measured at initial in the run and after the run. The measuring results are shown in Table 3. In addition, each of white solid images, images having character patterns occupying 7 %, half tone images, 2 dot fine line images were output 5 sheets and evaluated. The evaluation results are shown in Table 4.

**[Table 3]**

| Sample | Surface potential (V) (Initial) | | Surface potential (V) (A4 size after 5,000 prints) | |
|---|---|---|---|---|
| | Image non-irradiation portion | Image irradiation portion | Image non-irradiation portion | Image irradiation portion |
| Example 1 | -853 | -120 | -843 | -115 |
| Example 2 | -847 | -110 | -848 | -102 |
| Example 3 | -851 | -122 | -837 | -108 |
| Example 4 | -855 | -121 | -849 | -121 |
| Comparative Example 1 | -905 | -231 | -885 | -274 |
| Comparative Example 2 | -911 | -228 | -893 | -275 |
| Comparative Example 3 | -912 | -213 | -894 | -221 |
| Comparative Example 4 | -907 | -206 | -878 | -241 |

**[Table 4]**

| Sample | Initial image | 25,000th image | 5,000th image |
|---|---|---|---|
| Example 1 | Good | Good | Good |
| Example 2 | Good | Good | Good |
| Example 3 | Good | Good | Good |
| Example 4 | Good | Good | Good |
| Comparative Example 1 | Good | Slight background fouling | Background fouling |
| Comparative Example 2 | Good | Good | Slight background fouling |
| Comparative Example 3 | Good | Good | Background fouling |
| Comparative Example 4 | Good | Slight background fouling | Background fouling |

As seen in Tables 3 and 4, it is found that the electrophotographic image bearing member of the present invention of Examples 1 to 4 stably maintain their surface potential and can form quality images even after its repetitive use.

### Example 5

Titanyl phthalocyanine used in Example 1 was put in a bead mill (DISPERMAT SL type, manufactured by VMA-GETZMANN) and dispersed at a rotation of 3,000 rpm. The inner diameter of the dispersion space was 100 mm, the outer diameter of the dispersion rotor was 90 mm, and the beads used in dispersion was zirconia beads (manufactured by Toray Industries) having an average diameter of 0.5 mm. By this dispersion treatment, titanyl phthalocyanine having a fractured regular tetrahedron form, i.e., a pseudo-regular tetrahedron form, having a side of 0.1 µm was obtained. Liquid for application for a charge generating layer was prepared in the same manner as in Example 1 using the thus obtained titanyl phthalocyanine to manufacture an electrophotographic image bearing member. The electrophotographic image bearing member was evaluated in the same manner as in Example 1. The electrophotographic image bearing member stably maintained its surface potential and formed quality images even after its repetitive use.

As seen in the results of Examples described above, titanyl phthalocyanine of the present invention has good dispersability, easy handling property, and excellent electric characteristics. By using the titanyl phthalocyanine for forming a charge generating layer, a stable electrophotographic image bearing member in which its chargeability does not deteriorate and its residual potential does not rise even for repetitive use, an electrophotographic apparatus using the electrophotographic image bearing member, and a process cartridge therefor, can be obtained.

### [Effects of the Invention]

According to the present invention, titanyl phthalocyanine crystal type having good dispersability, easy handling property, high sensitivity, and excellently stable electric characteristics can be obtained. That is, Y type titanyl phthalocyanine which has an X-ray diffraction spectrum such that a main peak is observed at a Bragg (2θ) angle of 27.3 ± 0.2 ° can be obtained.

By using this titanyl phthalocyanine to form a charge generating layer, a stable and highly sensitive electrophotographic image bearing member in which its chargeability does not deteriorate and its residual potential does not rise even during repetitive use can be obtained. In addition, when this image bearing member is configured in an electrophotographic image bearing member or a process cartridge therefor, stable and quality electrophotographic images can be formed for an extended period of time for a high speed printing.

## Claims

1. A titanyl phthalocyanine comprising:
titanyl phthalocyanine crystals, at least 25 % of which have a regular tetrahedron form having a side length of from 0.1 to 1 µm or a fractured pseudo-regular tetrahedron form in which at least 15 % of the volume of the base regular tetrahedron remains, based on the total volume of all the titanyl phthalocyanine,
wherein the titanyl phthalocyanine has an X-ray diffraction spectrum such that a main peak is observed at a Bragg (2θ) angle of 27.3 ± 0.2 °.

2. A titanyl phthalocyanine comprising:
titanyl phthalocyanine crystals, at least 25 % of which have a regular triangle form having a side of from 0.1 to 1 µm when observed with a transmission electron microscope (TEM) or a fractured form in which at least 15 % of the area of the regular triangle form remains when observed with the transmission electron microscope (TEM), based on the total area of all the titanyl phthalocyanine in a transmission electron microscope photograph,
wherein the titanyl phthalocyanine has an X-ray diffraction spectrum such that a main peak is observed at a Bragg (2θ) angle of 27.3 ± 0.2 °.

3. The titanyl phthalocyanine according to Claim 1 or 2, wherein further multiple sharp diffraction peaks are observed at a Bragg (2θ) angle in a range of 9.0 to 10.0 ° (± 0.2 °) in the X-ray diffraction spectrum.

4. The titanyl phthalocyanine according to Claim 1 or 2, wherein, in the X-ray diffraction spectrum, a broad peak is observed at a Bragg (2θ) angle of 7.3 ± 0.2 ° and 24.1 ± 0.2 °.

5. A liquid for application to an electrophotographic image bearing member, comprising:
the titanyl phthalocyanine set forth in any one of Claims 1 to 4;
a binder resin; and
a solvent.

6. The liquid for application to an electrophotographic image bearing member according to Claim 5, wherein the solvent is a ketone.

7. A method of manufacturing a liquid for application to an electrophotographic image bearing member, comprising:
mixing Y type titanyl phthalocyanine, a binder resin and a solvent with a dispersion device to disperse the titanyl phthalocyanine,
wherein the dispersed titanyl phthalocyanine comprises titanyl phthalocyanine crystals, at least 25 % of which have a regular tetrahedron form having a side length of from 0.1 to 1 µm or a fractured pseudo-regular tetrahedron form in which at least 15 % of the volume of the base regular tetrahedron remains, based on the total volume of all the titanyl phthalocyanine, and the titanyl phthalocyanine has an X-ray diffraction spectrum such that a main peak is observed at a Bragg (2θ) angle of 27.3 ± 0.2 ° and multiple sharp diffraction peaks are observed at a Bragg (2θ) angle in a range of 9.0 to 10.0 ° (± 0.2 °).

8. A method of manufacturing a liquid for application to an electrophotographic image bearing member, comprising:
mixing Y type titanyl phthalocyanine, a binder resin and a solvent with a dispersion device to disperse the titanyl phthalocyanine,
wherein the dispersed titanyl phthalocyanine comprises titanyl phthalocyanine crystals, at least 25 % of which have a regular triangle form having a side of from 0.1 to 1 µm when observed with a transmission electron microscope (TEM) or a fractured form in which at least 15 % of the area of the regular triangle form remains when observed with the transmission electron microscope (TEM), based on the total area of all the titanyl phthalocyanine in a transmission electron microscope photograph, and the dispersed titanyl phthalocyanine has an X-ray diffraction spectrum such that a main peak is observed at a Bragg (2θ) angle of 27.3 ± 0.2 ° and multiple sharp diffraction peaks are observed at a Bragg (2θ) angle in a range of 9.0 to 10.0 ° (± 0.2 °).

9. An electrophotographic image bearing member, comprising:
an electroconductive substrate; and
a charge generating layer located overlying the electroconductive substrate, comprising the titanyl phthalocyanine set forth in any one of Claims 1 to 4.

10. The electrophotographic image bearing member according to Claim 9, wherein the charge generating layer comprises a butyral resin having a butyralization degree of less than 70 mol %.

11. The electrophotographic image bearing member according to Claim 9, wherein the charge generating layer comprises a butyral resin having a formalization degree of less than 15 mol %.

12. The electrophotographic image bearing member according to Claim 10 or 11, wherein the butyral resin comprises a polymer of a vinyl compound or a copolymer resin thereof.

13. An electrophotograpic image bearing member, comprising:
an electroconductive substrate; and
a charge generating layer formed on the electroconductive substrate using the liquid for application set forth in Claim 5 or 6.

14. An electrophotographic apparatus, comprising:
the electrophotographic image bearing member set forth in any one of Claims 9 to 13;
a charger configured to charge the electrophotographic image bearing member;
an irradiator configured to irradiate the elctrophotographic image bearing member to form a latent electrostataic image thereon;
a developing device configured to develop the electrophotographic image bearing member; and
a transfer device configured to transfer the developed image to a transfer medium.

15. The electrophotographic apparatus according to Claim 14, wherein the irradiator comprises a writing light source having a wavelength not greater than 800 nm.

16. The electrophotographic apparatus set forth in Claim 15, wherein the electrophotographic apparatus comprises two or more of the writing light sources with a space therebetween not greater than 5 µm.

17. A process cartridge, comprising:
the electrophotographic image bearing member set forth in any one of Claims 9 to 13; and
at least one device selected from the group consisting of a charging member, an irradiator, a developing device, a cleaning device and a quenching device;
wherein the process cartridge integrally supports the electrophotographic image bearing member and the at least one device and is detachably attached to the main body of an electrophotographic apparatus.

18. An electrophotographic recording method, comprising:
repeating a cycle of charging, irradiation, development, and transfer using the electrophotographic apparatus set forth in any one of Claims 14 to 16.

## Patentansprüche

1. Titanylphthalocyanin, umfassend:
Titanylphthalocyaninkristalle, von denen mindestens 25% eine reguläre Tetraederform mit einer Seitenlänge von 0,1 bis 1 µm oder eine gebrochene pseudo-reguläre Tetraederform, in der mindestens 15% des Volumens des grundlegenden regulären Tetraeders verbleiben, bezogen auf das Gesamtvolumen des gesamten Titanylphthalocyanins, aufweisen,
wobei das Titanylphthalocyanin ein solches Röntgenbeugungsspektrum aufweist, dass ein Hauptpeak bei einem Bragg (2θ)-Winkel von 27,3 ± 0,2° beobachtet wird.

2. Titanylphthalocyanin, umfassend:
Titanylphthalocyaninkristalle, von denen mindestens 25% eine reguläre Dreiecksform mit einer Seite von 0,1 bis 1 µm bei Betrachtung mit einem Transmissionselektronenmikroskop (TEM) oder eine gebrochene Form, bei der mindestens 15% der Fläche der regulären Dreiecksform bei Betrachtung mit dem Transmissionselektronenmikroskop (TEM) verbleiben, bezogen auf die gesamte Fläche des gesamten Titanylphthalocyanins in einer Transmissionselektronenmikroskop-Fotografie, aufweisen,
wobei das Titanylphthalocyanin ein solches Röntgenbeugungsspektrum aufweist, dass ein Hauptpeak bei einem Bragg (2θ)-Winkel von 27,3 ± 0,2° beobachtet wird.

3. Titanylphthalocyanin nach Anspruch 1 oder 2, wobei weitere mehrfache scharfe Beugungspeaks bei einem Bragg (2θ)-Winkel in einem Bereich von 9,0 bis 10,0° (± 0,2°) im Röntgenbeugungsspektrum beobachtet werden.

4. Titanylphthalocyanin nach Anspruch 1 oder 2, wobei im Röntgenbeugungsspektrum ein breiter Peak bei einem Bragg (2θ)-Winkel von 7,3 ± 0,2° und 24,1 ± 0,2° beobachtet wird.

5. Flüssigkeit zur Aufbringung auf ein elektrofotografisches Bildträgerelement, umfassend:
das Titanylphthalocyanin, das in irgendeinem der Ansprüche 1 bis 4 angegeben ist;
ein Bindemittelharz; und
ein Lösungsmittel.

6. Flüssigkeit zur Aufbringung auf ein elektrofotografisches Bildträgerelement nach Anspruch 5, worin das Lösungsmittel ein Keton ist.

7. Verfahren zur Herstellung einer Flüssigkeit zur Aufbringung auf ein elektrofotografisches Bildträgerelement, umfassend:
das Mischen von Titanylphthalocyanin vom Y-Typ, einem Bindemittelharz und einem Lösungsmittel mit einer Dispergiervorrichtung, um das Titanylphthalocyanin zu dispergieren,
wobei das dispergierte Titanylphthalocyanin Titanylphthalocyaninkristalle umfasst, von denen mindestens 25% eine reguläre Tetraederform mit einer Seitenlänge von 0,1 bis 1 µm oder eine gebrochene pseudo-reguläre Tetraederform, bei der mindestens 15% des Volumens des grundlegenden regulären Tetraeders verbleiben, bezogen auf das Gesamtvolumen des gesamten Titanylphthalocyanins, aufweisen und das Titanylphthalocyanin ein solches Röntgenbeugungsspektrum aufweist, dass ein Hauptpeak bei einem Bragg (2θ)-Winkel von 27,3 ± 0,2° beobachtet wird und mehrfache scharfe Beugungspeaks bei einem Bragg (2θ)-Winkel in einem Bereich von 9,0 bis 10,0° (± 0,2°) beobachtet werden.

8. Verfahren zur Herstellung einer Flüssigkeit zur Aufbringung auf ein elektrofotografisches Bildträgerelement, umfassend:
das Mischen von Titanylphthalocyanin vom Y-Typ, einem Bindemittelharz und einem Lösungsmittel mit einer Dispergiervorrichtung, um das Titanylphthalocyanin zu dispergieren,
wobei das dispergierte Titanylphthalocyanin Titanylphthalocyaninkristalle aufweist, von denen mindestens 25% eine reguläre Dreiecksform mit einer Seite von 0,1 bis 1 µm bei Betrachtung mit einem Transmissionselektronenmikroskop (TEM) oder eine gebrochene Form, bei der mindestens 15% der Fläche der regulären Dreiecksform bei Betrachtung mit dem Transmissionselektronenmikroskop (TEM) verbleiben, bezogen auf die gesamte Fläche des gesamten Titanylphthalocyanins in einer Transmissionselektronenmikroskop-Fotografie, aufweisen und das dispergierte Titanylphthalocyanin ein solches Röntgenbeugungspektrum aufweist, dass ein Hauptpeak bei einem Bragg (2θ)-Winkel von 27,3 ± 0,2° beobachtet wird und mehrfache scharfe Beugungspeaks bei einem Bragg (2θ)-Winkel in einem Bereich von 9,0 bis 10,0° (± 0,2°) beobachtet werden.

9. Elektrofotografisches Bildträgerelement, umfassend:
ein elektrisch leitendes Substrat; und
eine Ladungserzeugungsschicht, die sich über dem elektrisch leitenden Substrat befindet, umfassend das Titanylphthalocyanin, das in irgendeinem der Ansprüche 1 bis 4 angegeben ist.

10. Elektrofotografisches Bildträgerelement nach Anspruch 9, worin die Ladungserzeugungsschicht ein Butyralharz mit einem Butyralisierungsgrad von weniger als 70 Mol-% umfasst.

11. Elektrofotografisches Bildträgerelement nach Anspruch 9, worin die Ladungserzeugungsschicht ein Butyralharz mit einem Formalisierungsgrad von weniger als 15 Mol-% umfasst.

12. Elektrofotografisches Bildträgerelement nach Anspruch 10 oder 11, worin das Butyralharz ein Polymer von einer Vinylverbindung oder ein Copolymerharz davon umfasst.

13. Elektrofotografisches Bildträgerelement, umfassend:
ein elektrisch leitendes Substrat; und
eine Ladungserzeugungsschicht, die unter Verwendung der in Anspruch 5 oder 6 angegebenen Flüssigkeit zum Auftragen auf dem elektrisch leitenden Substrat gebildet ist.

14. Elektrofotografische Vorrichtung, umfassend:
das elektrofotografische Bildträgerelement, das in irgendeinem der Ansprüche 9 bis 13 angegeben ist;
eine Ladevorrichtung, die zum Aufladen des elektrofotografischen Bildträgerelements konfiguriert ist;
eine Bestrahlungsvorrichtung, die zum Bestrahlen des elektrofotografischen Bildträgerelements konfiguriert ist, um ein latentes elektrostatisches Bild darauf zu bilden;
eine Entwicklungsvorrichtung, die zur Entwicklung des elektrofotografischen Bildträgerelements konfiguriert ist; und
eine Übertragungsvorrichtung, die zur Übertragung des entwickelten Bilds auf ein Übertragungsmedium konfiguriert ist.

15. Elektrofotografische Vorrichtung nach Anspruch 14, worin die Bestrahlungsvorrichtung eine Schreiblichtquelle mit einer Wellenlänge von nicht größer als 800 nm umfasst.

16. Elektrofotografische Vorrichtung, die in Anspruch 15 angegeben ist, wobei die elektrofotografische Vorrichtung zwei oder mehr der Schreiblichtquellen mit einem Raum dazwischen von nicht mehr als 5 µm umfasst.

17. Prozesskartusche, umfassend:
das in irgendeinem der Ansprüche 9 bis 13 angegebene elektrofotografische Bildträgerelement; und
mindestens eine Vorrichtung ausgewählt aus der Gruppe bestehend aus einem Ladeelement, einer Bestrahlungsvorrichtung, einer Entwicklungsvorrichtung, einer Reinigungsvorrichtung und einer Quenchvorrichtung;
wobei die Prozesskartusche das elektrofotografische Bildträgerelement und die mindestens eine Vorrichtung integriert trägt und ablösbar an den Hauptkörper einer elektrofotografischen Vorrichtung angebracht ist.

18. Elektrofotografisches Aufzeichnungsverfahren, umfassend:
Wiederholen eines Zyklus von Aufladung, Bestrahlung, Entwicklung und Übertragung unter Verwendung der in irgendeinem der Ansprüche 14 bis 16 angegebenen elektrofotografischen Vorrichtung.

## Revendications

1. Titanylphtalocyanine comprenant :
des cristaux de titanylphtalocyanine, dont au moines 25 % présentent une forme tétrahédrique régulière ayant une longueur de côté de 0,1 à 1 µm ou une forme tétrahédrique pseudo-régulière fracturée dans laquelle au moins 15 % du volume du tétrahèdre régulier de base subsistent, rapportés au volume total de la totalité de la titanylphtalocyanine,
dans laquelle la titanylphtalocyanine présente un spectre de diffraction aux rayons X tel que l'on observe un pic principal à un angle Bragg (2θ) de 27,3 ± 0,2°.

2. Titanylphtalocyanine comprenant :
des cristaux de titanylphtalocyanine, dont au moins 25 % présentent une forme de triangle régulier ayant un côté de 0,1 à 1 µm lorsqu'ils sont observés avec un microscope électronique à transmission (TEM) ou une forme fracturée dans laquelle au moins 15 % de la surface de la forme du triangle régulier subsistent lorsqu'ils sont observés avec le microscope électronique à transmission (TEM), rapportés à la surface totale de la totalité de la titanylphtalocyanine dans une photographie au microscope électronique à transmission,
dans laquelle la titanylphtalocyanine présente un spectre de diffraction aux rayons X tel que l'on observe un pic principal à un angle Bragg (2θ) de 27,3 ± 0,2°.

3. Titanylphtalocyanine selon la revendication 1 ou 2, dans laquelle on observe en plus de multiples pics de diffraction pointus à un angle Bragg (2θ) dans un intervalle de 0,9 à 10,0° (± 0,2°) dans le spectre de diffraction aux rayons X.

4. Titanylphtalocyanine selon la revendication 1 ou 2, dans laquelle on observe dans le spectre de diffraction aux rayons X un pic large à un angle Bragg (2θ) de 7,3 ± 0,2° et de 24,1 ± 0,2°.

5. Liquide pour une application à un élément portant une image électrophotographique comprenant :
la titanylphtalocyanine donnée dans l'une quelconque des revendications 1 à 4 ;
une résine de liant ; et
un solvant.

6. Liquide pour une application à un élément portant une image électrophotographique selon la revendication 5, dans lequel le solvant est une cétone.

7. Procédé de fabrication d'un liquide pour une application à un élément portant une image électrophotographique comprenant :
le mélange de titanylphtalocyanine de type Y, d'une résine de liant et d'un solvant avec un dispositif de dispersion pour disperser la titanylphtalocyanine,
dans lequel la titanylphtalocyanine dispersée comprend des cristaux de titanylphtalocyanine, dont au moins 25 % présentent une forme tétrahédrique régulière ayant une longueur de côté de 0,1 à 1 µm ou une forme tétrahédrique pseudo-régulière fracturée dans laquelle au moins 15 % du volume du tétrahèdre régulier de base subsistent, rapportés au volume total de la totalité de la titanylphtalocyanine, et la titanylphtalocyanine présente un spectre de diffraction aux rayons X tel que l'on observe un pic principal à un angle Bragg (2θ) de 27,3 ± 0,2° et l'on observe de multiples pics de diffraction pointus à un angle Bragg (2θ) dans un intervalle de 9,0 à 10,0° (± 0,2°).

8. Procédé de fabrication d'un liquide pour une application à un élément portant une image électrophotographique comprenant :
le mélange de titanylphtalocyanine de type Y, d'une résine de liant et d'un solvant avec un dispositif de dispersion pour disperser la titanylphtalocyanine,
dans lequel la titanylphtalocyanine dispersée comprend des cristaux de titanylphtalocyanine dont au moins 25 % présentent une forme de triangle régulier ayant un côté de 0,1 à 1 µm lorsqu'il est observé avec un microscope électronique à transmission (TEM) ou une forme fracturée dans laquelle au moins 15 % de la surface de la forme de triangle régulier subsistent lorsqu'elle est observée avec le microscope électronique à transmission (TEM), rapportés à la surface totale de la totalité de la titanylphtalocyanine dans une photographie au microscope électronique à transmission, et la titanylphtalocyanine dispersée présente un spectre de diffraction aux rayons X tel que l'on observe un pic principal à un angle Bragg (2θ) de 27,3 ± 0,2° et l'on observe de multiples pics de diffraction pointus à un angle Bragg (2θ) dans un intervalle de 9,0 à 10,0° (± 0,2°).

9. Elément portant une image électrophotographique comprenant :
un substrat électroconducteur ; et
une couche générant une charge disposée sur le substrat électroconducteur comprenant la titanylphtalocyanine donnée dans l'une quelconque des revendications 1 à 4.

10. Elément portant une image électrophotographique selon la revendication 9, dans lequel la couche générant une charge comprend une résine de butyral présentant un degré de butyralisation inférieur à 70 % en mol.

11. Elément portant une image électrophotographique selon la revendication 9, dans lequel la couche générant une charge comprend une résine de butyral présentant un degré de formalisation inférieur à 15 % en mol.

12. Elément portant une image électrophotographique selon la revendication 10 ou 11, dans lequel la résine de butyral comprend un polymère d'un composé vinylique ou une résine copolymère de celui-ci.

13. Elément portant une image électrophotographique comprenant :
un substrat électroconducteur ; et
une couche générant une charge formée sur le substrat électroconducteur en utilisant le liquide pour une application donné dans la revendication 5 ou 6.

14. Appareil électrophotographique comprenant :
l'élément portant une image électrophotographique donné dans l'une quelconque des revendications 9 à 13 ;
un chargeur configuré pour charger l'élément portant une image électrophotographique ;
un dispositif d'irradiation configuré pour irradier l'élément portant une image électrophotographique pour former une image électrostatique latente sur son dessus ;
un dispositif de développement configuré pour développer l'élément portant une image électrophotographique ; et
un dispositif de transfert configuré pour transférer l'image développé vers un milieu de transfert.

15. Appareil électrophotographique selon la revendication 14, dans lequel le dispositif d'irradiation comprend une source de lumière d'enregistrement présentant une longueur d'onde d'au plus 800 nm.

16. Appareil électrophotographique selon la revendication 15, dans lequel l'appareil électrophotographique comprend deux sources de lumière d'enregistrement ou plus avec un espace entre celles-ci d'au plus 5 µm.

17. Cartouche de procédé comprenant :
l'élément portant une image électrophotographique donné dans l'une quelconque des revendications 9 à 13 ; et
au moins un dispositif choisi parmi un élément de charge, un dispositif d'irradiation, un dispositif de développement, un dispositif de nettoyage et un dispositif d'extinction ;
dans laquelle la cartouche de procédé supporte intégralement l'élément portant une image électrophotographique et le au moins un dispositif et est fixée de manière détachable au corps principal d'un appareil électrophotographique.

18. Procédé d'enregistrement électrophotographique comprenant :
la répétition d'un cycle de charge, d'irradiation, de développement et de transfert utilisant l'appareil électrophotographique donné dans l'une quelconque des revendications 14 à 16.
